# EUROPEAN PATENT SPECIFICATION

(11) **EP 3 388 839 B1**
(45) Date of publication and mention of the grant of the patent: **30.08.2023**
(21) Application number: 17165672.1
(22) Date of filing: 10.04.2017
(51) Int. Cl.: G01N 35/00, B65G 47/24, B65G 47/244, B25J 15/00, G01N 35/04

(54) **CENTERING UNIT FOR DIAGNOSTICS LABORATORY TRANSPORTING COMPARTMENT**
ZENTRIEREINHEIT FÜR EIN TRANSPORTFACH FÜR LABORDIAGNOSTIKA
UNITÉ DE CENTRAGE POUR COMPARTIMENT DE TRANSPORT DE LABORATOIRE DE DIAGNOSTICS

(43) Date of publication of application: 17.10.2018
(73) Proprietor: F. Hoffmann-La Roche AG, 4070 Basel (CH); Roche Diagnostics GmbH, 68305 Mannheim (DE)
(72) Inventor: ARNOLD, Daniel, 5634 Merenschwand (CH); WENZLER, Fabian, 6343 Holzhäusem (CH)
(74) Representative: Herren, Barbara

(56) References cited:
- WO-A1-2014/002953
- WO-A1-2014/113401
- WO-A1-2015/155147
- US-A- 5 959 221
- US-A1- 2015 233 956
- US-A1- 2016 159 579

## Description

### Field of the Invention

The present invention belongs to the field of automated in vitro diagnostic sample processing. Within this field, it relates to a unit, a system and a method for centering diagnostics laboratory transporting compartments in order to ensure accuracy and safety of certain test sample processing steps.

### Background

In diagnostic laboratory environments liquid test samples as well as test reagents are transferred between multiple stations such as pre- analytical, analytical and post-analytical stations for test sample processing. Typically, liquid test samples and test reagents are transferred in diagnostics laboratory transporting compartments inserted in diagnostics laboratory transporting compartment holders which can receive either one or multiple diagnostics laboratory transporting compartments. Depending on the test sample type, test sample processing step, test reagent and manufacturer the dimensions of diagnostics laboratory transporting compartments like diameter, side length, height and geometry varies. Accordingly, diagnostics laboratory transporting compartment holders require flexible adaptors to receive diagnostics laboratory transporting compartments of different dimensions. Diagnostics laboratory transporting compartments can be inserted into diagnostics laboratory transporting compartment holders manually or the insertion is mediated by an automated diagnostics laboratory transporting compartment handling or sorting device. In semi-automated laboratories the diagnostics laboratory transporting compartments and their corresponding holders are transferred manually whereas in fully-automated laboratories the diagnostics laboratory transporting compartment holders are transported on laboratory conveyor systems in order to distribute the test samples and test reagents to connected stations which can conduct different sample processing steps and tests on a different number of test samples at the same time.

Some test sample processing steps include pipetting operations like the aspiration and/or dispensation of liquid test samples and test reagents out of and/or into the diagnostics laboratory transporting compartment using a pipetting device. For these pipetting operations an accurate vertical orientation of the diagnostics laboratory transporting compartment relative to the aspiration/ dispensation position of the pipetting device is important as a physical contact between the pipetting device and the diagnostics laboratory transporting compartment can cause test sample cross-contamination, test reagent cross-contamination, and/ or damage of the diagnostics laboratory transporting compartment or pipetting device.

However, as diagnostics laboratory transporting compartments are often manually inserted into the diagnostics laboratory transporting compartment holders and the flexible adaptors of the diagnostics laboratory transporting compartment holders have at least small insertion variability, diagnostics laboratory transporting compartments have not always a vertical but a tilted orientation in the diagnostics laboratory transporting compartment holder. Moreover, a shift of the vertical orientation of the diagnostics laboratory transporting compartment can be caused by improper manual transport as well as by uneven or impure surfaces of laboratory conveyor systems. In addition, as transportation paths of conveyor systems also possesses some tolerances, the diagnostics laboratory transporting compartment holders are not always properly centered relative to the aspiration/ dispensation positions of pipetting devices or handle positions of handling devices.

US20160159579 discloses a device for repositioning sample tubes in a tube rack using two gripping arms. Each of the two gripping arms can be resiliently deformable in order to adapt to sample tubes. WO 2014/002953 shows a similar device for holding and moving a sample tube.

There is a need to center diagnostics laboratory transporting compartments of different dimensions and their corresponding holders in a simple, reliable and cost-efficient way for delicate test sample processing steps. It was an object of the present invention to improve conventional centering mechanisms, particularly to better serve the needs of automated in vitro diagnostic test sample processing.

### Summary

The present disclosure relates to a centering unit, a laboratory system and a method for centering one or multiple diagnostics laboratory transporting compartments of different dimensions.

The invention is set out in the appended set of claims.

### Detailed description

The present disclosure relates to a centering unit for diagnostics laboratory transporting compartment. The centering unit for diagnostics laboratory transporting compartment comprises at least two support parts which are fixed on a frame opposite each other. The centering unit for diagnostics laboratory transporting compartment further comprises at least two arms. Each of the at least two arms comprises a first arm member and a second arm member connected to each other pivotally with a respective joint. In the middle region of the first arm member each arm is connected pivotally about a pivot point on each support part. At the end portion opposite to the joint connection of each first arm member of the at least two arms a gripper is attached. The middle of the distance between the grippers determines a vertical axis of a centering position. The distance between the gripper and the pivot point of each arm is the same. The centering unit for diagnostics laboratory transporting compartment further comprises a connector on which the end portion opposite to the joint connection of each second arm member is connected pivotally about at least one pivot point and the connector is connected movably on a guiding element. The centering unit for diagnostics laboratory transporting compartment further comprises an elastic member which is connected with the connector and a further connector. The further connector is connected movably on the guiding element. The centering unit for diagnostics laboratory transporting compartment further comprises an actuator coupled to the further connector.

An advantage of this centering unit for diagnostics laboratory transporting compartment is that the at least two arms are connected with a single movable connector enabling a synchronized rotation of the two arms for a more reliable and better centering of diagnostics laboratory transporting compartments relative to an aspiration and/or dispensation position of a pipetting device or to a handle position of a handling device.

As used herein, the term "centering" relates to a process where the longitudinal axis of the diagnostics laboratory transporting compartment and/ or diagnostics laboratory transporting compartment holder is aligned with the vertical axis of a centering position. The vertical axis of the centering position is in turn aligned with the aspiration/ dispensation position of a pipetting device and/ or handling position of a handling or sorting device. The pipetting device or the diagnostics laboratory transporting compartment handling device can be part of a pre-analytical, analytical, or post-analytical station. A pre-analytical station can usually be used for the preliminary processing of test samples or sample tubes. An analytical station can be designed, for example, to use a test sample or part of the test sample and a test reagent in order to produce a measurable signal, on the basis of which it is possible to determine whether the analyte is present, and if so in what concentration. A post-analytical station can usually be used for the post-processing of test samples like the archiving of test samples. The pre-analytical, analytical and post-analytical stations may comprise, for example, at least one station from the group of following stations: a sorting station for sorting test samples or test sample tubes, a cap removal station for removing caps or closures on sample tubes, a cap fitting station for fitting caps or closures on sample tubes, a pipetting station for pipetting a sample, an aliquoting station for aliquoting samples, a centrifuging station for centrifuging samples, an analyzer for analyzing an sample, an archiving station for archiving samples, a sample tube type determination station for determining a sample tube type, a sample quality determination station for determining a sample quality.

As used herein, the term "centering unit" relates to a device which conducts a centering process where the longitudinal axis of the diagnostics laboratory transporting compartment and/ or diagnostics laboratory transporting compartment holder is aligned with the vertical axis of a centering position.

The centering unit for diagnostics laboratory transporting compartment comprises a frame which is a stationary basis or scaffold which is non-movable with respect to the surroundings at least during operation of the centering unit for diagnostic laboratory transporting compartment. The frame is adapted to fix support parts rigidly (e.g. welded, bolted, etc.) in order to position the support parts in a three-dimensional space within or outside the frame. The frame can consist of one piece or multiple pieces interconnected to each other. The frame is made of any suitable material which provides a sufficient rigidity (e.g. metal, plastic, etc.). The frame can be connected to other frames of centering units for diagnostics laboratory transporting compartment or other systems such as conveyor, pre- analytical, analytical and post-analytical systems.

In a more specific embodiment, the frame can form a sluice comprising a bottom and two opposing side walls which encompass a transportation channel for diagnostics laboratory transporting compartments. One of the side walls is open for providing access to a transportation channel. The bottom is configured to accommodate a diagnostics laboratory transporting compartment conveyor.

In another embodiment, the frame can be part of a rigid chassis of a centering unit or connected systems such as pre- analytical, analytical and post-analytical systems.

In another embodiment, the frame can be part of a rigid housing of a centering unit or connected systems such as pre- analytical, analytical and post-analytical systems.

The centering unit for diagnostics laboratory transporting compartment comprises at least two support parts which are fixed on the frame opposite each other in a minimum distance so that at least one diagnostics laboratory transporting compartment can be positioned between the two support parts. A support part can be a carrier element on which at least one other part can be connected movably (e.g. connected with pivot points, joints, etc.) or non-movably (e.g. welded, bolted, etc.) in order to position the at least one other part in a three-dimensional space within or outside the frame.

In one embodiment, the frame and the support parts are molded as a single piece. This improves the rigidity of the centering unit and therefore improves the accuracy of the centering of diagnostics laboratory transporting compartments.

The centering unit for diagnostics laboratory transporting compartment comprises two hinged arms with compartment grippers positioned opposite each other and forming an arm pair. The middle of the distance between the compartment grippers determines a vertical axis of a centering position. The compartment grippers of the arm pair can be positioned to a receiving and releasing position and to a centering position. In the receiving and releasing position the distance between the two compartment grippers is large enough for moving and/ or re-moving the diagnostics laboratory transporting compartment and/ or diagnostics laboratory transporting compartment holder between the two compartment grippers. In the centering position the two compartment grippers press evenly from opposite sides towards the vertical axis of the centering position. If a diagnostics laboratory transporting compartment is positioned between the two compartment grippers, the two compartment grippers press evenly from opposite sides on the diagnostics laboratory transporting compartment thereby centering the diagnostics laboratory transporting compartment.

In one embodiment, each arm of the at least one first and one second hinged arms comprises a first arm member and a second arm member. The first arm member has a different or same shape and/ or dimensions (e.g. length, diameter, width etc.) compared to the second arm member. The first and a second arm member which are made of any suitable material with sufficient rigidity (e.g. metal or plastic) are connected to each other pivotally with a respective joint.

In a more specific embodiment, the respective joint is a pin joint enabling the first and second arm member to pivot towards and away from each other and thereby flexing and extending the two arms.

In one embodiment, each of the two arms is connected pivotally about a pivot point on each of the two support parts in the middle region of the first arm member of each of the two arms.

In a more specific embodiment, the distance between the gripper and the pivot point of each of the at least two arms and the distance between the pivot point and the respective j oint of each of the at least two arms have a ratio between 1 and 0.1. An advantage of this arrangement is that long rotary motions of the first and second arm member are converted into short and more precise gripper movements. Accordingly, manufacturing tolerances of the first and second arm members can be compensated resulting in a more accurate centering of the laboratory transporting compartment.

In one embodiment, each arm also comprises a compartment gripper which is attached at the end portion opposite to the joint connection of the first arm member in an angle so that the compartment gripper is horizontally positioned when the gripper is in a centering position.

In one embodiment, the positions of the grippers relative to the height of the diagnostics laboratory transporting compartment are selected so that a reliable test sample processing is possible.

In a more specific embodiment, the grippers can be configured to grip the diagnostics laboratory transporting compartment at least 20% of the height of the laboratory transporting compartment below the top opening in order to reliably process test samples by avoiding contamination by the grippers. Additionally, the size of gripper contact points, lines or areas relative to surface of the diagnostics laboratory transporting compartment are as small as possible so that the risk of damaging attached barcodes or RFID tags is minimized.

In one embodiment, the compartment grippers of the at least one first and one second hinged arms are bifurcated. Each bifurcated gripper comprises two symmetrically connected fingers of the same length and having an angle between 1° and 179° degrees to each other, wherein the two fingertips are horizontally positioned when the gripper is in the centering position. The two fingers have a straight or curved shape or a combination thereof. One example of a bifurcated gripper with two straight fingers and an angle of 90° to each other is a V-shaped gripper which contacts the diagnostics laboratory transporting compartment at two separate contact points. Depending on the range of dimensions of the diagnostics laboratory transporting compartment to be centered, the angle between the two fingers has to be selected. The larger the dimensions of the diagnostics laboratory transporting compartment the greater the selected angle. The contact point between the gripper and the diagnostics laboratory transporting compartment can be increased by fingers having curved shapes which improve the centering stability. Bifurcated grippers are advantageous for aligning the longitudinal axis of a cylindrical diagnostics laboratory transporting compartment with the vertical axis of the centering position.

In another embodiment, the grippers can be flat clamps which contact the diagnostics laboratory transporting compartment at two opposite contact lines or contact areas. Flat clamps are advantageous for aligning the longitudinal axis of a cubic diagnostics laboratory transporting compartment with the vertical axis of the centering position.

The vertical axis of a centering position is determined by the middle of the distance between two opposing compartment grippers. When the grippers are bifurcated the vertical axis of the centering position is additionally determined by the middle of the distance between two opposing fingertips of the bifurcated gripper.

In one embodiment, the vertical axis of the centering position is aligned with an aspiration and/or dispensation position of a pipetting device enabling accurate and safe pipetting operations.

In another embodiment, the vertical axis of the centering position is aligned with a handle position of a diagnostics laboratory transporting compartment handling device enabling accurate and safe handling operations.

In one embodiment, the distance between the gripper and the pivot point of each arm is the same within the scope of general manufacturing accuracies of the first arm members. This assures that the gripper contact points, lines, or areas are opposite each other relative the vertical axis of the centering position.

The centering unit for diagnostics laboratory transporting compartment further comprises a first connector on which the two arms are connected pivotally.

In a more specific embodiment, the end portions opposite to the joint connections of the two second arm members are connected pivotally about two pivot points on the connector.

In an alternative embodiment, the end portions opposite to the joint connections of the two second arm members are connected pivotally about one pivot point on the connector.

In one embodiment, the first connector is located underneath the arm pair so that a pipetting device has direct access to the open top of the diagnostics laboratory transporting compartment when located between the grippers of the arm pair. This allows safe pipetting when the diagnostics laboratory transporting compartment is positioned between the grippers of the two arms and kept in a centered position.

In one embodiment, the first connector is located underneath the arm pair so that a handling device has direct access to the top of the diagnostics laboratory transporting compartment when located between the grippers of the arm pair. This allows safe handling operations when the diagnostics laboratory transporting compartment is positioned between the grippers of the two arms and kept in a centered position.

The centering unit for diagnostics laboratory transporting also comprises a guiding element on which the first connector is connected movably. The guiding element defines a first moving direction and a second moving direction, opposite to the first direction, as well as a moving distance of the first connector. The bidirectional movements of the first connector are converted into synchronous rotations of the two arms in order to bring the grippers to a receiving and releasing position and centering position. The synchronization of the two arms can thus advantageously center the diagnostics laboratory transporting compartment accurately.

In a specific embodiment, the bidirectional movements of the first connector are linear downward/ upward movements or forward/ backward movements.

In a more specific embodiment, the guiding element is a rod with a centered and vertical orientation relative to the connector for an upward and downward movement of the first connector. The upward movement of the connector results in a rotation of the two arm members to each other. Thereby the arms are flexing and the grippers are moved synchronously towards the ventricle axis of the centering position. The downward movement of the first connector results in a rotation of the two arm members away from each other. Thereby the arms are extending and the grippers are moved synchronously away from the vertical axis of the centering position and to a diagnostics laboratory transporting compartment receiving and releasing position.

In one embodiment, the first connector is made of a material which is heavy enough to move the connector downwards (e.g. iron or heavy alloys) along the guiding element.

In a more specific embodiment, the guiding element can be located underneath the connector in order to provide direct access to the top of the diagnostics laboratory transporting compartment which is located between the grippers.

The centering unit for diagnostics laboratory transporting further comprises a first elastic member which is connected with the first connector and a second connector. The second connector is connected movably on the guiding element. The first elastic member between the first connector and second connector converts the movement of the second connector into a resilient movement of the first connector, the at least two arms, and the grippers. Thus the first elastic member connected between the first connector and the second connector can compensate the various dimensions of diagnostics laboratory transporting compartments. Accordingly, the adaptation and centering of the diagnostics laboratory transporting compartments of different dimensions depend on a single elastic member. This allows an accurate and reliable centering of the diagnostics laboratory transporting compartment for a long operation time in a challenging environment, where hundreds of diagnostics laboratory transporting compartments per day have to be centered, with minimized maintenance activities and costs as well as reduced operation downtimes as no unequal deteriorations of two separate or multiple elastic members can occur.

In a specific embodiment, the elastic member is a spring. The spring can be a linear spring and wraps the guiding element.

The second connector is connected movably on the guiding element. In order to provide direct access to the top of the diagnostics laboratory transporting compartment when located between the grippers, the second connector is connected movably on the guiding element underneath the first connector.

In one embodiment, the second connector comprises an upper element and lower element which are connected to each other and encompass the first connector from above and below relative the guiding element. The upper element of the second connector supports the downward movement of the first connector when the second connector is moving downwards.

The centering unit for diagnostics laboratory transporting further comprises an actuator coupled to the second connector. The actuator moves the second connector of the centering unit along the guiding element to a first moving direction and a second moving direction, opposite to the first direction. The actuator can be an electric motor having an actively rotated rotor which is coupled to the second connector with a toothed belt.

The centering unit for diagnostics laboratory transporting compartment comprises at least one further support part, a third rotatable arm with a compartment holder gripper, and a counterpart for aligning the longitudinal axis of the diagnostics laboratory transporting compartment holder with the vertical axis of the centering position. The at least one further support part is fixed on the frame or on a further frame between one of the at least two support parts and the guiding element. The third rotatable arm is connected pivotally about a pivot point on the further support part with a second elastic member. The third rotatable arm has an exposed end and a compartment holder gripper which is attached to the end portion opposite to the exposed end and located between one of the compartment grippers of the at least two arms and the guiding element. The counterpart is fixed on the frame or on the further frame opposite to the compartment holder gripper when the compartment holder gripper is in a centering position.

In a specific embodiment, the exposed end of the third rotatable arm is positioned within a planar triangle defined by the first arm member and the second arm member of one of the at least one first and one second hinged arms. With this arrangement the one of the at least one first and one second hinged arms presses on the exposed end of the third arm when the one arm extends by rotating the two arm members of the one arm away from each other. The resulting pressure on the exposed end results in a rotation of the third rotatable arm and thereby positioning the compartment holder gripper to a diagnostics laboratory transporting compartment holder receiving and releasing position. Through the rotation of the third rotatable arm a tension on the second elastic member is built. When the two arm members of the one arm are rotated towards each other and the one arm is flexed, the exposed end of the third rotatable arm is released resulting in a tension relaxation of the second elastic member and the compartment holder gripper is moved towards the ventricle axis of the centering position. As the one of the two hinged arms controls the rotary motions of the third rotatable arm and the positioning of the compartment holder gripper, the centering unit for diagnostics laboratory transporting compartment can advantageously center the diagnostics laboratory transporting compartment and its corresponding diagnostics laboratory transporting compartment holder with a single actuator at the same time.

In a more specific embodiment, the second elastic member is a torsion spring.

In a further specific embodiment, the compartment holder gripper is a bifurcated gripper. This is advantageous for aligning the longitudinal axis of a cylindrical diagnostics laboratory transporting compartment holder with the vertical axis of the centering position.

In an alternative embodiment, the compartment holder gripper is a flat clamp. This is advantageous for aligning the longitudinal axis of a cubic diagnostics laboratory transporting compartment holder with the vertical axis of the centering position.

The centering unit for diagnostics laboratory transporting compartment further comprises a counterpart which is used to support the centering of the diagnostics laboratory transporting compartment holder. The counterpart is fixed on the frame or on the further frame opposite to the compartment holder gripper when the compartment holder gripper is in a centering position. The counterpart and the compartment holder gripper have a second minimum distance to each other so that at least one diagnostics laboratory transporting compartment holder can be positioned between the compartment holder gripper and the counterpart. The usage of a simple counterpart is advantageous when standardized diagnostics laboratory transporting compartments of same dimensions have to be centered.

In an embodiment, the counterpart is substituted by a second further support part and a fourth rotatable arm with a second compartment holder gripper.

In a more specific embodiment, the third rotatable arm and the fourth rotatable arm are located opposite each other for aligning the longitudinal axis of the diagnostics laboratory transporting compartment holder of different dimensions with the vertical axis of the centering position. The counterpart comprises a second further support part which is fixed on the frame or on the further frame between one of the at least two support parts and the guiding element. The counterpart comprises a fourth rotatable arm which is connected pivotally about a pivot point on the second further support part with a further elastic member. The fourth rotatable arm has an exposed end and a second compartment holder gripper which is attached to the end portion opposite to the exposed end and located between one of the compartment grippers of the at least one first and one second hinged arms and the guiding element. The middle of the distance between the compartment holder grippers of the third rotatable arm and the fourth rotatable arm determines a vertical axis of the centering position. The distance between the compartment holder gripper and the pivot point of each of the third rotatable arm and fourth rotatable arm is the same within the scope of general manufacturing accuracies of the third and fourth rotatable arms. This assures that the contact points, lines, or areas of the two compartment holder grippers on the surface of the diagnostics laboratory transporting compartment holder are opposite each other relative to the longitudinal axis of the diagnostics laboratory transporting compartment holder.

In a specific embodiment, the exposed end of the fourth rotatable arm is positioned within a planar triangle defined by the first arm member and the second arm member of one of the at least one first and one second hinged arms. With this arrangement one of the at least one first and one second hinged arms presses on the exposed end of the fourth rotatable arm when the one hinged arm extends by rotating the two arms members of the one hinged arm away from each other. The resulting pressure on the exposed end results in a rotation of the fourth rotatable arm and thereby positioning the further gripper to a diagnostics laboratory transporting compartment holder receiving and releasing position. Through the rotation of the fourth rotatable arm a tension on the further elastic member is built. When the two arm members of the one hinged arm are rotated towards each other and the one hinged arm is flexed, the exposed end of the fourth rotatable arm is released resulting in a tension relaxation of the further elastic member and the second compartment holder gripper is moved towards the ventricle axis of the centering position. With this arrangement, the at least one first and one second hinged arms control the rotary motions of the third rotatable arm and the fourth rotatable arm and the positioning of the two compartment holder grippers. Accordingly, the centering unit for diagnostics laboratory transporting compartment can advantageously center diagnostics laboratory transporting compartments of different dimensions and diagnostics laboratory transporting compartment holders of different dimensions with one a single actuator at the same time.

In a more specific embodiment, the further elastic member of the fourth rotatable arm is a torsion spring.

In a further specific embodiment, the second compartment holder gripper of the fourth rotatable arm is a bifurcated gripper. This is advantageous for aligning the longitudinal axis of a cylindrical diagnostics laboratory transporting compartment holder of different dimensions with the vertical axis of the centering position.

In an alternative embodiment, the second compartment holder gripper of the fourth rotatable arm is a flat clamp. This is advantageous for aligning the longitudinal axis of a cubic diagnostics laboratory transporting compartment holder of different dimensions with the vertical axis of the centering position.

In one embodiment, the centering unit for diagnostics laboratory transporting compartment further comprises a light barrier adapted to detect an interruption of a light beam caused by a diagnostics laboratory transporting compartment or diagnostics laboratory transporting compartment holder when moved between the at least one first and one second hinged arms. The interruption of a light beam generates a signal which is transmitted to a control device comprising a computing device adapted to execute software which is configured to interpret the signal and to send commands to the actuator in order to move the further connector of the centering unit for diagnostics laboratory transporting compartment. One interpretation of the signal is that the diagnostics laboratory transporting compartment holder is positioned between the two compartment grippers and the actuator moves the second connector in order to position the two compartment grippers in a centering position.

In one embodiment, the centering unit for diagnostics laboratory transporting compartment can further comprise a stopper configured to stop a diagnostics laboratory transporting compartment holder transported on a diagnostics laboratory transporting compartment conveyor. The stopper can be a pivoted barrier which is fixed on the frame or on the further frame with a perpendicular orientation relative to the transportation path of the diagnostics laboratory transporting compartment conveyor for blocking and releasing the transportation path of a diagnostics laboratory transporting compartment holder. As a result, the diagnostics laboratory transporting compartment holder can be kept stationary relative to the centering unit for diagnostics laboratory transporting compartment so that the grippers can center the diagnostics laboratory transporting compartments and diagnostics laboratory transporting compartment holders.

In one embodiment, the centering unit for diagnostics laboratory transporting compartment is connected to at least one further centering unit for diagnostics laboratory transporting compartment. The second connectors of each centering unit for diagnostics laboratory transporting compartment are connected to a common connector. The common connector is connected movably on at least two guiding elements and coupled to the actuator.

In one embodiment, the number of connected centering units for diagnostics laboratory transporting compartment is equal to the number of aspiration/ dispensation positions of a pipetting device and/ or handling positions of a diagnostics laboratory transporting compartment handling device. Accordingly, it is possible to actuate a plurality of arm pairs and thereby centering multiple diagnostics laboratory transporting compartments and/or diagnostics laboratory transporting compartment holders with a single actuator at the same time. Furthermore, with this arrangement the rotatable arms of the connected centering units for diagnostics laboratory transporting compartment can center together test sample tube racks or test reagent cassette racks.

In a further embodiment, the common connector can be coupled to an extended actively rotated rotor of the actuator via two tooth belts located at each end of the common connector. With this configuration the guidance and movement of the common connector is optimized.

In one specific embodiment, the common connector is connected movably on an extra guiding element which defines a third moving direction and a fourth moving direction, opposite to the third direction, as well as the moving distance of the common connector, wherein the third moving direction of the extra guiding element is parallel to the first moving direction of the guiding element and the fourth moving direction of the extra guiding element is parallel to the second moving direction of the guiding element. The extra guiding element supports and further optimizes the guidance and movement of the common connector.

In a more specific embodiment, the extra guiding element comprises two parallel rails or notches with a defined length which encompass the common connector.

In one embodiment, the common connector comprises an upper element and a lower element which are connected to each other and encompass the connectors of each centering unit from above and below relative the guiding elements. The upper element of the common connector supports the downward movements of the connectors of each centering unit when the common connector is moving downwards.

The present invention also relates to a laboratory system which comprises at least one centering unit for diagnostics laboratory transporting compartment as described herein, at least one diagnostics laboratory transporting compartment holder having one or more flexible adaptors configured to receive at least one diagnostics laboratory transporting compartment of different dimensions, and at least one diagnostics laboratory transporting compartment. The at least one diagnostics laboratory transporting compartment is a vessel comprising a test sample and is inserted in the diagnostics laboratory transporting compartment holder.

As used herein, the term "diagnostics laboratory transporting compartment holder" relates to any device adapted for receiving, holding, transporting, and/or releasing at least one diagnostics laboratory transporting compartment.

In one embodiment, the diagnostics laboratory transporting compartment holder has a cylindrical shape, a closed bottom, and an open top with an insertion area for inserting one diagnostics laboratory transporting compartment in an upright position. The diagnostics laboratory transporting compartment holder possesses a longitudinal axis perpendicular to and in the midpoint of its horizontal cross section. One example of such a cylindrical diagnostics laboratory transporting compartment holder is a single sample tube holder.

In another embodiment, the diagnostics laboratory transporting compartment holder has a cubic shape, a closed bottom, and a top with one or multiple insertion areas for inserting one or multiple diagnostics laboratory transporting compartments in an upright position. The cubic holder possesses one or multiple longitudinal axis in the midpoints of the one or multiple insertion areas and perpendicular to its horizontal cross section. One example of such a cubic diagnostics laboratory transporting compartment holder is test sample tube rack. Another example of such a cubic diagnostics laboratory transporting compartment holder is a reagent cassette rack.

In one embodiment, the insertion areas of the diagnostics laboratory transporting compartment holders comprise a flexible adapter configured to receive diagnostics laboratory transporting compartments of different dimensions.

As used herein, the term "diagnostics laboratory transporting compartment" relates to a vessel adapted for receiving, storing, transporting, and/or releasing a content such as a test sample (e.g. blood, urine, serum, plasma, or liquefied biopsy sample, etc.), a test reagent (e.g. reagent for immunochemistry tests, clinical chemistry tests coagulation tests, hematological tests, molecular biological tests, etc.), or a combination thereof. Depending on the content of the diagnostics laboratory transporting compartment, sample processing step, and manufacturer the material as well as the dimension of the diagnostics laboratory transporting compartment like diameter, side length, height and geometry varies.

In one embodiment, the diagnostics laboratory transporting compartment is a vessel with a cylindrical shape, a closed bottom, and an open top, wherein the cylindrical vessel possess a longitudinal axis perpendicular to and in the midpoint of its horizontal cross section. Alternatively, the closed bottom of the cylindrical vessel can be rounded. One example of such a cylindrical diagnostics laboratory transporting compartment is a vessel comprising a test sample.

In another embodiment, the diagnostics laboratory transporting compartment is a vessel with a cubic shape, a closed bottom, and a top with one or multiple pipetting openings. The cubic vessel possesses one or multiple longitudinal axis in the midpoints of the one or multiple pipetting openings and perpendicular to its horizontal cross section. One example of such a cubic diagnostics laboratory transporting compartment is a reagent cassette comprising a test reagent. Another example of such a cubic diagnostics laboratory transporting compartment is a reaction cuvette comprising a test sample or a test reagent or a mixture thereof.

In one embodiment, the diagnostics laboratory transporting compartment is equipped with a cap or lid, either connected to the diagnostics laboratory transporting compartment or provided independently.

In one embodiment, the laboratory system further comprises a pipetting device having at least one aspiration and/or dispensation position. The at least one aspiration and/or dispensation position is aligned with the vertical axis of the centering position of the at least one centering unit for diagnostics laboratory transporting compartment. With this arrangement an accurate and safe pipetting of samples and/ or reagents is assured.

In another embodiment, the laboratory system further comprises a handling device having at least one handling position. The at least one handle position is aligned with the vertical axis of the centering position of the at least one centering unit for diagnostics laboratory transporting compartment. With this arrangement an accurate and safe handling of laboratory transporting compartments is assured.

In one embodiment, the pipetting device and/ or the handling device is part of a pre-analytical, analytical, or post-analytical station.

In one embodiment, the laboratory system further comprises a diagnostics laboratory transporting compartment conveyor which is capable of being operatively coupled to a laboratory conveyor system. Accordingly, the diagnostics laboratory transporting compartment conveyor can receive and release diagnostics laboratory transporting compartments from/ to the laboratory conveyor system which is connected with stations such as pre-analytical, analytical and/or post-analytical stations of a laboratory system in order to move and remove the diagnostics laboratory transporting compartment between the grippers.

In one embodiment, the diagnostics laboratory transporting compartment conveyor is part of the laboratory conveyor system.

In one embodiment, the laboratory conveyor system can further comprise a stopper located in front of the at least one centering unit for diagnostics laboratory transporting compartment and configured to stop a diagnostics laboratory transporting compartment holder transported on a laboratory conveyor system. The stopper can be a pivoted barrier with a perpendicular orientation relative to the transportation path of the laboratory conveyor system for blocking and releasing the transportation path of a diagnostics laboratory transporting compartment holder. As a result, the diagnostics laboratory transporting compartment can be kept stationary on the laboratory conveyor system so that a defined number of following diagnostics laboratory transporting compartments can catch up with the first the diagnostics laboratory transporting compartment holder and a group of diagnostics laboratory transporting compartments can be transported further to the at least one centering unit for diagnostics laboratory transporting compartment.

The present invention also relates to a method for centering a diagnostics laboratory transporting compartment using a centering unit for diagnostics laboratory transporting compartment as described herein. The method comprises the following steps:
a) moving the second connector away from the pivot points of the at least one first and one second hinged arms resulting in a rotation of each of the at least one first and one second hinged arms thereby positioning the compartment grippers to a diagnostics laboratory transporting compartment receiving and releasing position;
b) moving a diagnostics laboratory transporting compartment between the compartment grippers;
c) moving the second connector towards the pivot points of the at least one first and one second hinged arms resulting in a rotation of each of the arms thereby moving the compartment grippers towards the vertical axis of the centering position, wherein the compartment grippers press from opposite sides on the diagnostics laboratory transporting compartment to align the longitudinal axis of the diagnostics laboratory transporting compartment with the vertical axis of the centering position;
d) repeating the first step to release the diagnostics laboratory transporting compartment;
e) removing the diagnostics laboratory transporting compartment between the compartment grippers.

The method should be conducted briefly before a sample processing step like the pipetting of a test sample is initiated. As the centering unit for diagnostics laboratory transporting compartment provides direct access to the open top of the diagnostics laboratory transporting compartment, the method can be conducted right in front of or at the pipetting device. The laboratory transporting compartment can even be kept in the centering position by the compartment grippers of the centering unit during pipetting of the sample which improves significantly the safety of the sample processing step.

During step c) the compartment grippers press from opposite sides on the diagnostics laboratory transporting compartment and align the longitudinal axis of the diagnostics laboratory transporting compartment with the vertical axis of the centering position. The compartment grippers press from opposite sides equally on the diagnostics laboratory transporting compartment as both compartment grippers are resiliently coupled to the same elastic member via the connector. This improves the centering accuracy as well as the centering reliability of diagnostics laboratory transporting compartments having different dimensions as manufacturing tolerances of multiple elastic members is prevented. The accurate centering of the diagnostics laboratory transporting compartment avoids any contact between the diagnostics laboratory transporting compartment and pipetting devices during pipetting operations usually performed in the process of test sample analysis. Hence, a major advantage of the accurate and reliable centering is that any test sample cross-contaminations and damages of diagnostics laboratory transporting compartments and pipetting devices can be avoided and test sample analysis results are provided in the required quality and time.

The method for centering a diagnostics laboratory transporting compartment further comprises the following steps during step a) and step c) for centering a diagnostics laboratory transporting compartment holder:
- During step a) at least one of the at least one first and one second hinged arms presses on the exposed end of the third rotatable arm resulting in a rotation of the third rotatable arm thereby positioning the compartment holder gripper of the third rotatable arm to a diagnostics laboratory transporting compartment holder receiving and releasing position. And the rotation of the third rotatable arm builds tension on the second elastic member.
- During step c) the one of the at least one first and one second hinged arms releases the exposed end of the third rotatable arm resulting in a tension relaxation of the second elastic member and a rotation of the third rotatable arm thereby moving the compartment holder gripper towards the vertical axis of the centering position. The compartment holder gripper presses on the diagnostics laboratory transporting compartment holder and on the counterpart to align the longitudinal axis of the diagnostics laboratory transporting compartment holder with the longitudinal axis of the centering position.

In one embodiment of the method, the longitudinal axis of the diagnostics laboratory transporting compartment holder is aligned with the vertical axis of the centering position before the longitudinal axis of the diagnostics laboratory transporting compartment is aligned with the vertical axis of the centering position and released after the diagnostics laboratory transporting compartment is released.

In a further embodiment of the method, the moving of the diagnostics laboratory transporting compartment between the compartment grippers of the at least one first and one second hinged arms and the removing of the diagnostics laboratory transporting compartment between the compartment grippers of the at least two one first and one second hinged arms is mediated by the diagnostics laboratory transporting compartment conveyor.

The present invention also relates to a centering unit for diagnostics laboratory transporting compartment which comprises at least one first and one second hinged arms, each comprising a first end portion and a second end portion, with compartment grippers at the first end portion. The at least one first and one second hinged arms are mounted pivotally and opposite each other on a frame. The centering unit for diagnostics laboratory transporting compartment further comprises a first connector to which each of the second end portions of the hinged arms are connected pivotally and the first connector is movably connected on a guiding element. The centering unit for diagnostics laboratory transporting compartment comprises a second connector. The second connector and the first connector are resiliently connected to each other with a first elastic member and the second connector is movably connected on the guiding element. The centering unit for diagnostics laboratory transporting compartment comprises also an actuator for moving the further connector.

The centering unit for diagnostics laboratory transporting compartment comprises a frame which is a stationary basis or scaffold which is non-movable with respect to the surroundings at least during operation of the centering unit for diagnostic laboratory transporting compartment. The frame is adapted to fix support parts rigidly (e.g. welded, bolted, etc.) in order to position the support parts in a three-dimensional space within or outside the frame. The frame can consist of one piece or multiple pieces interconnected to each other. The frame is made of any suitable material which provides a sufficient rigidity (e.g. metal, plastic, etc.). The frame can be connected to other frames of centering units for diagnostics laboratory transporting compartment or other systems such as conveyor, pre- analytical, analytical and post-analytical systems.

In a more specific embodiment, the frame can form a sluice comprising a bottom and two opposing side walls which encompass a transportation channel for diagnostics laboratory transporting compartments. One of the side walls is open for providing access to a transportation channel. The bottom is configured to accommodate a diagnostics laboratory transporting compartment conveyor.

In another embodiment, the frame can be part of a rigid chassis of a centering unit or connected systems such as pre- analytical, analytical and post-analytical systems.

In another embodiment, the frame can be part of a rigid housing of a centering unit or connected systems such as pre- analytical, analytical and post-analytical systems.

In one embodiment, the centering unit for diagnostics laboratory transporting compartment comprises at least two support parts which are fixed on the frame opposite each other in a minimum distance so that at least one diagnostics laboratory transporting compartment can be positioned between the two support parts. A support part can be a carrier element on which at least one other part can be connected movably (e.g. connected with pivot points, joints, etc.) or non-movably (e.g. welded, bolted, etc.) in order to position the at least one other part in a three-dimensional space within or outside the frame.

In one embodiment, the frame and the support parts are molded as a single piece. This improves the rigidity of the centering unit and therefore improves the accuracy of the centering of diagnostics laboratory transporting compartments.

The centering unit for diagnostics laboratory transporting compartment comprises at least one first and one second hinged arms with compartment grippers at one end portion each. The at least one first and one second hinged arms are mounted pivotally and opposite each other on a frame forming an arm pair. The compartment grippers of the arm pair can be positioned to a receiving and releasing position and centering position by flexing and extending each of the at least one first and one second hinged arms. In the receiving and releasing position the distance between the two compartment grippers is large enough for moving and/ or re-moving the diagnostics laboratory transporting compartment and/ or diagnostics laboratory transporting compartment holder between the two compartment grippers. In the centering position the two compartment grippers press evenly from opposite sides towards the vertical axis of the centering position. If a diagnostics laboratory transporting compartment is positioned between the two compartment grippers, the two compartment grippers press evenly from opposite sides on the diagnostics laboratory transporting compartment thereby centering the diagnostics laboratory transporting compartment.

In one embodiment, each of the at least two hinged arms comprises a first arm member and a second arm member which are connected to each other pivotally with a respective joint. The first arm member has a different or same shape and/ or dimensions (e.g. length, diameter, width etc.) compared to the second arm member. The first and a second arm member are made of any suitable material with sufficient rigidity (e.g. metal or plastic). Each hinged arm also comprises a compartment gripper which is attached at the end portion opposite to the joint connection of the first arm member in an angle so that the compartment gripper is horizontally positioned when the compartment gripper is in a centering position.

In a more specific embodiment, the respective joint is a pin joint enabling the first and second arm member of each hinged arm to pivot towards and away from each other and thereby flexing and extending each of the at last one first and one second hinged arms.

In one embodiment, the respective joint is an elastic joint enabling the first and second arm member of each hinged arm to pivot towards and away from each other and thereby flexing and extending each of the at last one first and one second hinged arms.

In one embodiment, the middle region of the first arm member of each hinged arm is connected pivotally about a pivot point on the frame.

In a more specific embodiment, the distance between the compartment gripper and the pivot point of each of the at least one first and one second hinged arms and the distance between the pivot point and the respective joint of each of the at least one first and one second hinged arms have a ratio between 1 and 0.1. An advantage of this arrangement is that long rotary motions of the first and second arm member are converted into short and more precise gripper movements. Accordingly, manufacturing tolerances of the first and second arm members can be compensated resulting in a more accurate centering of the laboratory transporting compartment.

In one embodiment, the positions of the compartment grippers relative to the height of the diagnostics laboratory transporting compartment are selected so that a reliable sample processing is possible.

In a more specific embodiment, the compartment grippers can be configured to grip the diagnostics laboratory transporting compartment at least 20% of the height of the laboratory transporting compartment below the top opening in order to reliably process test samples by avoiding contamination by the compartment grippers. Additionally, the size of compartment gripper contact points, lines or areas relative to surface of the diagnostics laboratory transporting compartment are as small as possible so that the risk of damaging attached barcodes or RFID tags is minimized.

In one embodiment, the compartment grippers of the at least one first and one second hinged arms are bifurcated. Each bifurcated gripper comprises two symmetrically connected fingers of the same length and having an angle between 1° and 179° degrees to each other, wherein the two fingertips are horizontally positioned when the compartment gripper is in the centering position. The two fingers have a straight or curved shape or a combination thereof. One example of a bifurcated gripper with two straight fingers and an angle of 90° to each other is a V-shaped gripper which contacts the diagnostics laboratory transporting compartment at two separate contact points. Depending on the range of dimensions of the diagnostics laboratory transporting compartment to be centered, the angle between the two fingers has to be selected. The contact point between the compartment gripper and the diagnostics laboratory transporting compartment can be increased by fingers having curved shapes which improve the centering stability. Bifurcated grippers are advantageous for aligning the longitudinal axis of a cylindrical diagnostics laboratory transporting compartment with the vertical axis of the centering position.

In a further embodiment, the compartment grippers of the hinged arms can be flat clamps which contact the diagnostics laboratory transporting compartment at two opposite contact lines or contact areas. Flat clamps are advantageous for aligning the longitudinal axis of a cubic diagnostics laboratory transporting compartment with the vertical axis of the centering position.

In one embodiment, the vertical axis of a centering position is determined by the middle of the distance between two opposing compartment grippers. When the compartment grippers are bifurcated grippers the vertical axis of the centering position is additionally determined by the middle of the distance between two opposing fingertips of a bifurcated gripper.

In one embodiment, the vertical axis of the centering position is aligned with an aspiration and/or dispensation position of a pipetting device enabling accurate and safe pipetting operations.

In another embodiment, the vertical axis of the centering position is aligned with a handle position of a diagnostics laboratory transporting compartment handling device enabling accurate and safe handling operations.

In one embodiment, the distance between the compartment gripper and the pivot point of each hinged arm is the same within the scope of general manufacturing accuracies of the first arm members. This assures that the gripper contact points, lines, or areas are opposite each other relative the vertical axis of the centering position.

In one embodiment, the centering unit for diagnostics laboratory transporting compartment further comprises a connector on which the two hinged arms are connected pivotally.

In a more specific embodiment, the end portions opposite to the joint connections of the two second arm members of the hinged arms are connected pivotally about two pivot points on the connector.

In an alternative embodiment, the end portions opposite to the joint connections of the two second arm members are connected pivotally about one pivot point on the connector.

In one embodiment, the connector is located underneath the hinged arms so that a pipetting device or handling device has direct access to the open top of the diagnostics laboratory transporting compartment which is located between the grippers of the hinged arms. This allows pipetting or handling operations when the diagnostics laboratory transporting compartment is positioned between the grippers of the two hinged arms and kept in a centered position.

The centering unit for diagnostics laboratory transporting also comprises a guiding element on which the first connector is connected movably. The guiding element defines a first moving direction and a second moving direction, opposite to the first direction, as well as a moving distance of the connector. The bidirectional movements of the first connector are converted into synchronous rotations of the two hinged arms in order to bring the compartment grippers to a receiving and releasing position and centering position. The synchronization of the two hinged arms can thus advantageously center the diagnostics laboratory transporting compartment accurately.

In a specific embodiment, the bidirectional movements of the first connector are linear downward/ upward movements or forward/ backward movements.

In one embodiment, the guiding element is a rod with a centered and vertical orientation relative to the connector for an upward and downward movement of the connector. The upward movement of the connector results in a flexion of the two hinged arms. Thereby the compartment grippers are moved synchronously towards the ventricle axis of the centering position. The downward movement of the connector results in an extension of the hinged arms. Thereby the hinged arms are extending and the compartment grippers are moved synchronously away from the vertical axis of the centering position and to a diagnostics laboratory transporting compartment receiving and releasing position.

In one embodiment, the connector is made of a material which is heavy enough to move the connector downwards (e.g. iron or heavy alloys) along the guiding element.

In a more specific embodiment, the guiding element can be located underneath the first connector in order to provide direct access to the top of the diagnostics laboratory transporting compartment which is located between the grippers.

The centering unit for diagnostics laboratory transporting comprises a second connector and a first elastic member. The second connector and the first connector are resiliently connected to each other with the first elastic member. The second connector and the first connector are connected movably on the guiding element. The first elastic member between the first connector and second connector converts the movement of the second connector into a resilient movement of the first connector, the at least one first and one second hinged arms, and the compartment grippers. Thus the first elastic member connected between the first connector and the second connector can compensate the various dimensions of diagnostics laboratory transporting compartments. Accordingly, the adaptation and centering of the diagnostics laboratory transporting compartments of different dimensions depend on a single elastic member. This allows an accurate and reliable centering of the diagnostics laboratory transporting compartment for a long operation time in a challenging environment, where hundreds of diagnostics laboratory transporting compartments per day have to be centered, with minimized maintenance activities and costs as well as reduced operation downtimes as no unequal deteriorations of two separate or multiple elastic members can occur.

In a specific embodiment, the first elastic member is a spring. The spring can be a linear spring and wraps the guiding element.

The second connector is connected movably on the guiding element. In order to provide direct access to the top of the diagnostics laboratory transporting compartment when located between the compartment grippers, the second connector is connected movably on the guiding element underneath the first connector.

In one embodiment, the second connector comprises an upper element and lower element which are connected to each other and encompass the connector from above and below relative the guiding element. The upper element of the second connector supports the downward movement of the first connector when the second connector is moving downwards.

The centering unit for diagnostics laboratory transporting further comprises an actuator for moving the second connector. The actuator can be an electric motor having an actively rotated rotor which is coupled to the further connector with a toothed belt.

The centering unit for diagnostics laboratory transporting comprises at least one third rotatable arm with an exposed end and a first compartment holder gripper at the end portion opposite to the exposed end. The at least one third rotatable arm is coupled pivotally and opposite to a counterpart on the frame or on a further frame with a second elastic member. The exposed end is adapted to trigger the rotation of the third rotatable arm and movement of the first compartment holder gripper away from the vertical axis of the centering position.

In one embodiment, the third rotatable arm is coupled pivotally on the frame or on the further frame so that the first compartment holder gripper is located between one of the compartment grippers of the at least one first and one second hinged arms and the guiding element.

The exposed end is positioned so that a rotation of the third rotatable arm and movement of the first compartment holder gripper away from the vertical axis of the centering position is triggered by means of engagement with one of the at least one first and one second hinged arms.

In a more specific embodiment, the exposed end of the third rotatable arm is positioned within a planar triangle defined by the first arm member and the second arm member of one of the at least one first and one second hinged arms. With this arrangement one of the at least one first and one second hinged arms presses on the exposed end of the third rotatable arm when the one hinged arm extends. The resulting pressure on the exposed end results in a rotation of the third rotatable arm and thereby positioning the first compartment holder gripper to a diagnostics laboratory transporting compartment holder receiving and releasing position. Through the rotation of the third rotatable arm a tension on the second elastic member is built. When the one hinged arm is flexed, the exposed end of the third rotatable arm is released resulting in a tension relaxation of the second elastic member and the first compartment holder gripper is moved towards the ventricle axis of the centering position. As the flexion and extension of the one of the one first and one second hinged arms control the rotary motions of the third rotatable arm and the positioning of the first compartment holder gripper, the centering unit for diagnostics laboratory transporting compartment can advantageously center the diagnostics laboratory transporting compartment and its corresponding diagnostics laboratory transporting compartment holder with a single actuator at the same time.

In a specific embodiment, the second elastic member is a torsion spring.

In a further specific embodiment, the first compartment holder gripper is a bifurcated gripper. This is advantageous for aligning the longitudinal axis of a cylindrical diagnostics laboratory transporting compartment holder with the vertical axis of the centering position.

In an alternative embodiment, the first compartment holder gripper is a flat clamp. This is advantageous for aligning the longitudinal axis of a cubic diagnostics laboratory transporting compartment holder with the vertical axis of the centering position.

In one embodiment, the centering unit for diagnostics laboratory transporting compartment further comprises a counterpart which is used to support the centering of the diagnostics laboratory transporting compartment holder. The counterpart is fixed on the frame or on the further frame opposite to the first compartment holder gripper of the third rotatable arm when the first compartment holder gripper is in a centering position. The counterpart and the first compartment holder gripper have a second minimum distance to each other so that at least one diagnostics laboratory transporting compartment holder can be positioned between the first compartment holder gripper and the counterpart. The usage of a simple counterpart is advantageous when standardized diagnostics laboratory transporting compartments of same dimensions have to be centered.

In an embodiment, the counterpart is a fourth rotatable arm with an exposed end and a second compartment holder gripper as above-described.

In a specific embodiment, the third and fourth rotatable arms with first and second compartment holder grippers are located opposite each other for aligning the longitudinal axis of the diagnostics laboratory transporting compartment holder of different dimensions with the vertical axis of the centering position. The counterpart comprises a fourth rotatable arm which is connected pivotally about a pivot point on the further support part with a second elastic member. The fourth rotatable arm has an exposed end and a second compartment holder gripper which is attached to the end portion opposite to the exposed end and located between one of the compartment grippers of the at least one first and one second arms and the guiding element. The middle of the distance between the first and second compartment holder grippers of the third and fourth rotatable arms determines a vertical axis of the centering position and the distance between the compartment holder gripper and the pivot point of each of the third and fourth rotatable arms is the same within the scope of general manufacturing accuracies of the further arms. This assures that the contact points, lines, or areas of the first and second compartment holder grippers on the surface of the diagnostics laboratory transporting compartment holder are opposite each other relative to the longitudinal axis of the diagnostics laboratory transporting compartment holder. With this arrangement, the flexion and extension of the at least one first and one second hinged arms control the rotary motions of the third and fourth rotatable arms and the positioning of the first and second compartment holder grippers. Accordingly, the centering unit for diagnostics laboratory transporting compartment can advantageously center diagnostics laboratory transporting compartments of different dimensions and diagnostics laboratory transporting compartment holders of different dimensions with one a single actuator at the same time.

In one embodiment, the centering unit for diagnostics laboratory transporting compartment further comprises a light barrier adapted to detect an interruption of a light beam caused by a diagnostics laboratory transporting compartment or diagnostics laboratory transporting compartment holder when moved between the at least one first and one second hinged arms. The interruption of a light beam generates a signal which is transmitted to a control device comprising a computing device adapted to execute software which is configured to interpret the signal and to send commands to the actuator in order to move the second connector of the centering unit for diagnostics laboratory transporting compartment. One interpretation of the signal is that the diagnostics laboratory transporting compartment holder is positioned between the compartment grippers and the actuator moves the second connector in order to position the compartment grippers in a centering position.

In one embodiment, the centering unit for diagnostics laboratory transporting compartment can further comprise a stopper configured to stop a diagnostics laboratory transporting compartment holder transported on a diagnostics laboratory transporting compartment conveyor. The stopper can be a pivoted barrier which is fixed on the frame or on the further frame with a perpendicular orientation relative to the transportation path of the diagnostics laboratory transporting compartment conveyor for blocking and releasing the transportation path of a diagnostics laboratory transporting compartment holder. As a result, the diagnostics laboratory transporting compartment holder can be kept stationary relative to the centering unit for diagnostics laboratory transporting compartment so that the grippers can center the diagnostics laboratory transporting compartments and diagnostics laboratory transporting compartment holders.

In one embodiment, the centering unit for diagnostics laboratory transporting compartment is connected to at least one further centering unit for diagnostics laboratory transporting compartment. The further connectors of each centering unit for diagnostics laboratory transporting compartment are connected to a common connector. The common connector is connected movably on at least two guiding elements and coupled to the actuator. The number of connected centering units for diagnostics laboratory transporting compartment is equal to the number of aspiration/ dispensation positions of a pipetting device and/ or handling positions of a diagnostics laboratory transporting compartment handling device. Accordingly, it is possible to actuate a plurality of arm pairs and thereby centering multiple diagnostics laboratory transporting compartments and/or diagnostics laboratory transporting compartment holders with a single actuator at the same time. Furthermore, with this arrangement the further arms of the connected centering units for diagnostics laboratory transporting compartment can center together test sample tube racks or test reagent cassette racks.

In a further embodiment, the common connector can be coupled to an extended actively rotated rotor of the actuator via two tooth belts located at each end of the common connector. With this configuration the guidance and movement of the common connector is optimized.

In one specific embodiment, the common connector is connected movably on an extra guiding element which defines a third moving direction and a fourth moving direction, opposite to the third direction, as well as the moving distance of the common connector, wherein the third moving direction of the extra guiding element is parallel to the first moving direction of the guiding element and the fourth moving direction of the extra guiding element is parallel to the second moving direction of the guiding element. The extra guiding element supports and further optimizes the guidance and movement of the common connector.

In a more specific embodiment, the extra guiding element comprises two parallel rails or notches with a defined length which encompass the common connector.

In one embodiment, the common connector comprises an upper element and a lower element which are connected to each other and encompass the connectors of each centering unit from above and below relative the guiding elements. The upper element of the common connector supports the downward movements of the connectors of each centering unit when the common connector is moving downwards.

The present invention also relates to a laboratory system which comprises at least one centering unit for diagnostics laboratory transporting compartment as described herein, at least one diagnostics laboratory transporting compartment holder having one or more flexible adaptors configured to receive at least one diagnostics laboratory transporting compartment of different dimensions, and at least one diagnostics laboratory transporting compartment. The at least one diagnostics laboratory transporting compartment is a vessel comprising a test sample and is inserted in the diagnostics laboratory transporting compartment holder.

As used herein, the term "diagnostics laboratory transporting compartment holder" relates to any device adapted for receiving, holding, transporting, and/or releasing at least one diagnostics laboratory transporting compartment.

In one embodiment, the diagnostics laboratory transporting compartment holder has a cylindrical shape, a closed bottom, and an open top with an insertion area for inserting one diagnostics laboratory transporting compartment in an upright position. The diagnostics laboratory transporting compartment holder possesses a longitudinal axis perpendicular to and in the midpoint of its horizontal cross section. One example of such a cylindrical diagnostics laboratory transporting compartment holder is a single sample tube holder.

In another embodiment, the diagnostics laboratory transporting compartment holder has a cubic shape, a closed bottom, and an open top with one or multiple insertion areas for inserting one or multiple diagnostics laboratory transporting compartments in an upright position. The cubic holder possesses one or multiple longitudinal axis in the midpoints of the one or multiple insertion areas and perpendicular to its horizontal cross section. One example of such a cubic diagnostics laboratory transporting compartment holder is test sample tube rack. Another example of such a cubic diagnostics laboratory transporting compartment holder is a reagent cassette rack.

In one embodiment, the insertion areas of the diagnostics laboratory transporting compartment holders comprise a flexible adapter configured to receive diagnostics laboratory transporting compartments of different dimensions.

As used herein, the term "diagnostics laboratory transporting compartment" relates to a vessel adapted for receiving, storing, transporting, and/or releasing a content such as a test sample (e.g. blood, urine, serum, plasma, or liquefied biopsy sample, etc.), a test reagent (e.g. reagent for immunochemistry tests, clinical chemistry tests coagulation tests, hematological tests, molecular biological tests, etc.), or a combination thereof. Depending on the content of the diagnostics laboratory transporting compartment, sample processing step, and manufacturer the material as well as the dimension of the diagnostics laboratory transporting compartment like diameter, side length, height and geometry varies.

In one embodiment, the diagnostics laboratory transporting compartment is a vessel with a cylindrical shape, a closed bottom, and an open top, wherein the cylindrical vessel possess a longitudinal axis perpendicular to and in the midpoint of its horizontal cross section. Alternatively, the closed bottom of the cylindrical vessel can be rounded. One example of such a cylindrical diagnostics laboratory transporting compartment is a vessel comprising a test sample.

In another embodiment, the diagnostics laboratory transporting compartment is a vessel with a cubic shape, a closed bottom, and an open top, wherein the vessel possess a longitudinal axis perpendicular to and in the midpoint of its horizontal cross section. One example of such a cubic diagnostics laboratory transporting compartment is a reagent cassette comprising a test reagent. Another example of such a cubic diagnostics laboratory transporting compartment is a reaction cuvette comprising a test sample or a test reagent or a mixture thereof.

In one embodiment, the diagnostics laboratory transporting compartment is equipped with a cap or lid, either connected to the diagnostics laboratory transporting compartment or provided independently.

In one embodiment, the laboratory system further comprises a pipetting device having at least one aspiration and/or dispensation position. The at least one aspiration and/or dispensation position is aligned with the vertical axis of the centering position of the at least one centering unit for diagnostics laboratory transporting compartment. With this arrangement an accurate and safe pipetting of samples and/ or reagents is assured.

In another embodiment, the laboratory system further comprises a handling device having at least one handling position. The at least one handle position is aligned with the vertical axis of the centering position of the at least one centering unit for diagnostics laboratory transporting compartment. With this arrangement an accurate and safe handling of laboratory transporting compartments is assured.

In one embodiment, the pipetting device and/ or the handling device is part of a pre-analytical, analytical, or post-analytical station.

In one embodiment, the laboratory system further comprise a diagnostics laboratory transporting compartment conveyor which is capable of being operatively coupled to a laboratory conveyor system. Accordingly, the diagnostics laboratory transporting compartment conveyor can receive and release diagnostics laboratory transporting compartments from/ to the laboratory conveyor system which is connected with stations such as pre-analytical, analytical and/or post-analytical stations of a laboratory system in order to move and remove the diagnostics laboratory transporting compartment between the grippers.

In one embodiment, the diagnostics laboratory transporting compartment conveyor is part of the laboratory conveyor system.

In one embodiment, the laboratory conveyor system can further comprise a stopper located in front of the at least one centering unit for diagnostics laboratory transporting compartment and configured to stop a diagnostics laboratory transporting compartment holder transported on a laboratory conveyor system. The stopper can be a pivoted barrier with a perpendicular orientation relative to the transportation path of the laboratory conveyor system for blocking and releasing the transportation path of a diagnostics laboratory transporting compartment holder. As a result, the diagnostics laboratory transporting compartment can be kept stationary on the laboratory conveyor system so that a defined number of following diagnostics laboratory transporting compartments can catch up with the first the diagnostics laboratory transporting compartment holder and a group of diagnostics laboratory transporting compartments can be transported further to the at least one centering unit for diagnostics laboratory transporting compartment.

The present invention also relates to a method for centering a diagnostics laboratory transporting compartment using a centering unit for diagnostics laboratory transporting compartment as described herein. The method comprises the following steps:
a) moving the second connector to a first moving direction, thereby extending the at least one first and one second hinged arms and positioning the compartment grippers to a diagnostics laboratory transporting compartment receiving and releasing position;
b) moving a diagnostics laboratory transporting compartment between the compartment grippers;
c) moving the second connector to a second moving direction, thereby flexing the at least one first and one second hinged arms and moving the compartment grippers towards the vertical axis of the centering position, wherein the compartment grippers press from opposite sides on the diagnostics laboratory transporting compartment to align the longitudinal axis of the diagnostics laboratory transporting compartment with the vertical axis of the centering position;
d) repeating the first step to release the diagnostics laboratory transporting compartment;
e) removing the diagnostics laboratory transporting compartment between the compartment grippers.

The method should be conducted briefly before a sample processing step like the pipetting of a test sample is initiated. As the centering unit for diagnostics laboratory transporting compartment provides direct access to the open top of the diagnostics laboratory transporting compartment, the method can be conducted right in front of or at the pipetting device. The laboratory transporting compartment can even be kept in the centering position by the compartment grippers of the centering unit during pipetting of the sample which improves significantly the safety of the sample processing step.

During step c) the compartment grippers press from opposite sides on the diagnostics laboratory transporting compartment and align the longitudinal axis of the diagnostics laboratory transporting compartment with the vertical axis of the centering position. The compartment grippers press from opposite sides equally on the diagnostics laboratory transporting compartment as both compartment grippers are resiliently coupled to the same elastic member via the first connector. This improves the centering accuracy as well as the centering reliability of diagnostics laboratory transporting compartments having different dimensions as manufacturing tolerances of multiple elastic members is prevented. The accurate centering of the diagnostics laboratory transporting compartment avoids any contact between the diagnostics laboratory transporting compartment and pipetting devices during pipetting operations usually performed in the process of test sample analysis. Hence, a maj or advantage of the accurate and reliable centering is that any test sample cross-contaminations and damages of diagnostics laboratory transporting compartments and pipetting devices can be avoided and test sample analysis results are provided in the required quality and time.

The method for centering a diagnostics laboratory transporting compartment further comprises the following steps during step a) and step c) for centering a diagnostics laboratory transporting compartment holder:
- During step a) at least one of the hinged arms presses on the exposed end of the third rotatable arm resulting in a rotation of the third rotatable arm thereby positioning the first compartment holder gripper to a diagnostics laboratory transporting compartment holder receiving and releasing position and building tension on the second elastic member;
- During step c) at least one of the hinged arms releases the exposed end of the third rotatable arm resulting in a tension relaxation of the second elastic member and a rotation of the third rotatable arm thereby moving the first compartment holder gripper towards the vertical axis of the centering position. The first compartment holder gripper presses on the diagnostics laboratory transporting compartment holder and on the counterpart to align the longitudinal axis of the diagnostics laboratory transporting compartment holder with the longitudinal axis of the centering position.

In one embodiment, the longitudinal axis of the diagnostics laboratory transporting compartment holder is aligned with the vertical axis of the centering position before the longitudinal axis of the diagnostics laboratory transporting compartment is aligned with the vertical axis of the centering position and released after the diagnostics laboratory transporting compartment is released.

In a further embodiment of the method, the moving of the diagnostics laboratory transporting compartment between the compartment grippers of the at least one first and one second hinged arms and the removing of the diagnostics laboratory transporting compartment between the compartment grippers of the at least one first and one second hinged arms is mediated by the diagnostics laboratory transporting compartment conveyor.

Specific embodiments of the features of the centering unit for diagnostics laboratory transporting compartment, laboratory system and method for centering a diagnostics laboratory transporting compartment using a centering unit for diagnostics laboratory transporting compartment presented herein are as described herein.

### Short description of the figures

**Fig. 1** provides cross sections of the centering unit for diagnostics laboratory transporting compartment as described herein.
**Fig. 1A** shows a cross section of the centering unit for diagnostics laboratory transporting compartment having the compartment grippers in a centering position.
**Fig. 1B** shows a cross section of the centering unit for diagnostics laboratory transporting compartment having the compartment grippers in a diagnostics laboratory transporting compartment receiving and releasing position.
**Fig. 2** provides side views of connected centering units for diagnostics laboratory transporting compartment as described herein.
In **Fig. 2A** the compartment grippers of the centering units for diagnostics laboratory transporting compartment are in a diagnostics laboratory transporting compartment receiving and releasing position.
In **Fig. 2B** diagnostics laboratory transporting compartments with same diameters and heights are centered by the compartment grippers of the connected centering units for diagnostics laboratory transporting compartment.
In **Fig. 2C** diagnostics laboratory transporting compartments with different diameters are centered by the compartment grippers of the connected centering units for diagnostics laboratory transporting compartment.
**Fig. 3** provides a perspective and enlarged view of a centering unit for diagnostics laboratory transporting compartment. In Fig. 3 the compartment grippers of the centering unit for diagnostics laboratory transporting compartment are aligning the longitudinal axis of the diagnostics laboratory transporting compartment and diagnostics laboratory transporting compartment holder with the vertical axis of the centering position.
**Fig. 4** depicts a laboratory system for centering diagnostics laboratory transporting compartments and diagnostics laboratory transporting compartment holders.
**Fig. 5** shows embodiments of diagnostics laboratory transporting compartment holders and diagnostics laboratory transporting compartments.

### Detailed description of the figures

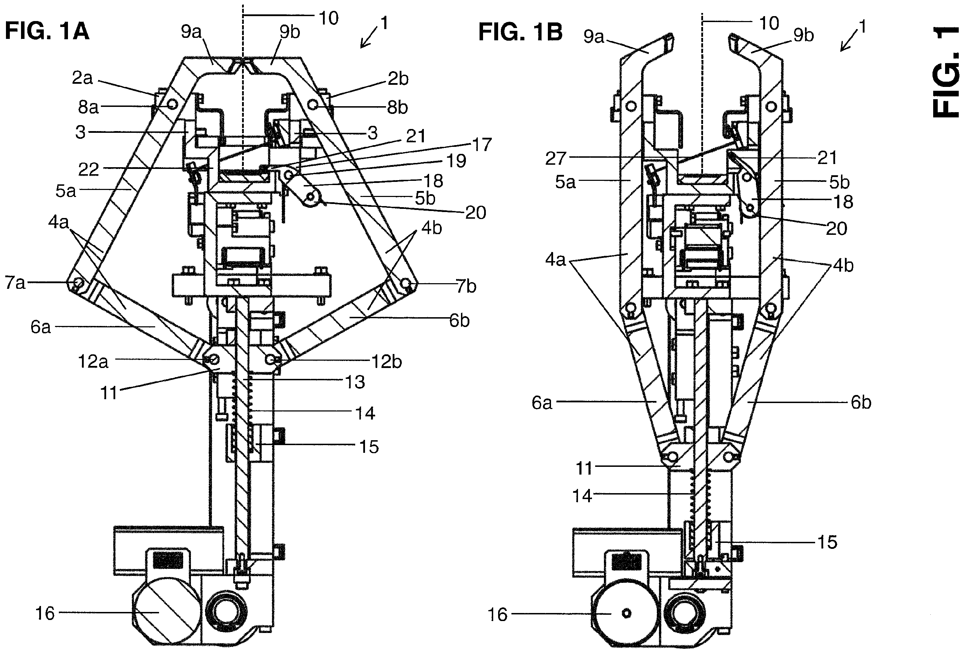

**Fig. 1** shows cross sections of an embodiment of the centering unit for diagnostics laboratory transporting compartment (1) as described herein. In **Fig. 1A** the compartment grippers (9a and 9b) of the centering unit for diagnostics laboratory transporting compartment (1) are in the diagnostics laboratory transporting compartment centering position. In **Fig. 1B** the compartment grippers (9a and 9b) of the centering unit (1) are in the diagnostics laboratory transporting compartment receiving and releasing position. As illustrated, the centering unit (1) comprises two support parts (2a and 2b) which are fixed on a frame (3) opposite each other in a defined distance. The centering unit (1) further comprises two hinged arms (4a and 4b). Each arm comprises a first arm member (5a and 5b) and a second arm member (6a and 6b) which are connected to each other pivotally with a respective j oint (7a and 7b). As shown in Fig. 1, in the middle region of the first arm member each arm is connected pivotally about a pivot point (8a and 8b) on each support part (2a and 2b). The compartment grippers (9a and 9b) are attached at the end portion opposite to the joint connection of each first arm member. The middle of the distance between the two compartment grippers determines the vertical axis of the centering position (10). The distance between the compartment gripper (9a and 9b) and the pivot point (8a and 8b) of each hinged arm is the same so that the contact point of the two compartment grippers is accurately aligned with the vertical axis of the centering position (10). Fig. 1 also shows a first connector (11) on which the two end portions opposite to the joint connection of each second arm member is connected pivotally about two pivot points (12a and 12b) and the first connector (11) is connected movably on the guiding element (13). In the shown embodiment, the centering unit for diagnostics laboratory transporting compartment (1) comprises a first elastic member (14), which is connected with the first connector (11) and a second connector (15). The second connector (15) is connected movably on the guiding element (13). The centering unit for diagnostics laboratory transporting compartment (1) has an actuator (16) to move the second connector away and towards the pivot points (8a, 8b).

As shown in Fig. 1B the second connector (15) was moved away from the pivot points (8a, 8b) compared to Fig. 1A. The movement of the second connector away from the pivot points (8a, 8b) (15) results in a rotation of the first arm members (5a, 5b) and second arm members (6a, 6b) away from each other and in a synchronous extension of the two hinged arms (4a, 4b). Thereby the compartment grippers (9a, 9b) are positioned to a diagnostics laboratory transporting compartment receiving and releasing position. When the second connector (15) is moved again towards the pivot points (8a, 8b) as shown in Fig. 1A, the first arm members (5a, 5b) and second arms members (6a, 6b) rotate towards each other and the two hinged arms (4a, 4b) flex. Thereby the compartment grippers (9a, 9b) move towards the vertical axis of the centering position (10).

As shown in Fig. 1 the centering unit for diagnostics laboratory transporting compartment (1) comprises a further support part (17) which is fixed on the frame (3) underneath of one of the two support parts (2b). A third rotatable arm (18) is connected pivotally about a pivot point (19) on the further support part. The third rotatable arm (18) has an exposed end (20) which is positioned within a planar triangle defined by the first and the second arm member of one of the two arms (4b). At the end portion opposite to the exposed end the third rotatable arm (18) has a first compartment holder gripper (21), wherein said first compartment holder gripper is located underneath of the compartment gripper of one of the two arms (9b). Fig. 1A also shows a counterpart (22) which is part of the frame (3) and located underneath of one of the two support parts (2a) and opposite to the first compartment holder gripper (21) when the first compartment holder gripper is in a centering position. When the hinged arms (4a and 4b) are extended as shown in Fig. 1B, the first arm member of one of the two arms (5b) presses on the exposed end (20) of the third rotatable arm (18) resulting in a rotation of the third rotatable arm thereby positioning the first compartment holder gripper (21) of the third rotatable arm to a diagnostics laboratory transporting compartment holder receiving and releasing position and building tension on a second elastic member. When the hinged arms (4a and 4b) flex again as shown in Fig. 1A, the first arm member of one of the two hinged arms (5b) releases the exposed end (20) of the third rotatable arm (18) resulting in a tension relaxation of the second elastic member and a rotation of the third rotatable arm thereby moving the first compartment holder gripper (21) towards the vertical axis of the centering position (10). As further shown in Fig. 1, the centering unit for diagnostics laboratory transporting compartment comprises a light barrier (27) for detecting the presence and/ or absence of the diagnostics laboratory transporting compartment holders or diagnostics laboratory transporting compartment between the arm pairs of the centering units.

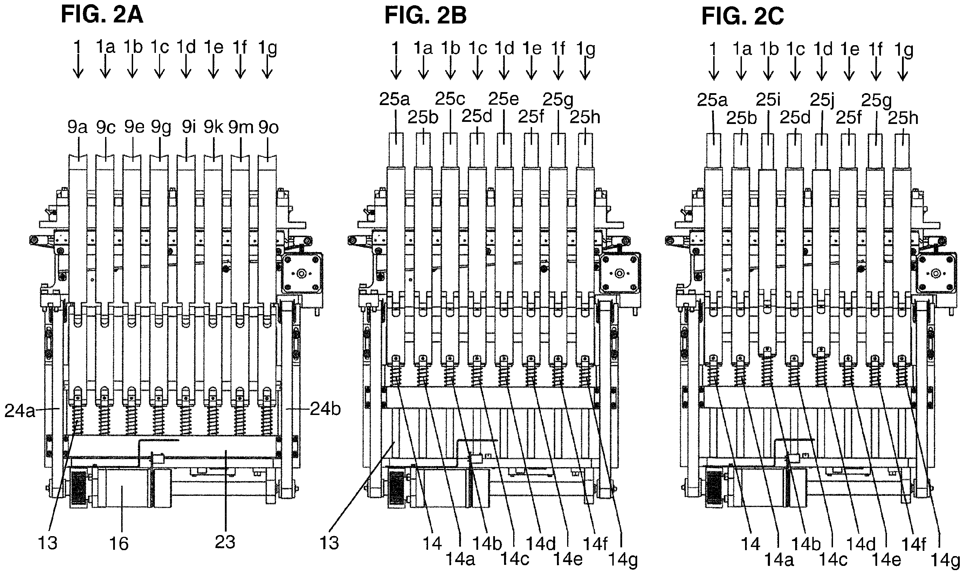

Fig. 2A-C show side views of an embodiment of the centering unit for diagnostics laboratory transporting compartment (1) which is connected to seven further centering units for diagnostics laboratory transporting compartment (1a- 1g) for maximally centering eight diagnostics laboratory transporting compartments at the same time. **Fig. 2A** shows the connected centering units for diagnostics laboratory transporting compartment (1-1g) having their compartment grippers (9a-9o) in a diagnostics laboratory transporting compartment reviving/ releasing position. In the shown embodiment, the compartment grippers (9a-9o) are bifurcated so that a contact surface with the diagnostics laboratory transporting compartment at the centering position is formed like a U or V from the top view. As further shown, the second connectors of each centering unit for diagnostics laboratory transporting compartment are connected to one common connector (23). The common connector (23) is connected movably on the guiding elements of each centering unit (13). As shown in Fig. 2A, the connected centering units for diagnostics laboratory transporting compartment (1-1g) have a single actuator (16) which is coupled to the common connector (23) with two toothed belts (24a, 24b). This provides an easy and cost-efficient actuation of multiple centering units for diagnostics laboratory transporting compartment (1-1g). Of course, the number of connected centering units for diagnostics laboratory transporting compartment (1-1g) is scalable according to the number of aspiration and/or dispensation positions of different pipetting devices or to the number of handle positions of different handling devices.

**Fig. 2B** shows the connected centering units for diagnostics laboratory transporting compartment (1-1g) where eight diagnostics laboratory transporting compartments (25a-h) with the same diameter and height are placed between the compartment grippers of the centering units, whereas in **Fig. 2C** the diagnostics laboratory transporting compartments (25 a-j) have two different diameters. The diagnostics laboratory transporting compartments 25i and 25j have a smaller diameter compared to the diagnostics laboratory transporting compartments 25a, 25b, 25d, 25f, 25g and 25h. Depending on the diameter of the diagnostics laboratory transporting compartment the first elastic members (14 -14g) are under different compressions: the larger the diameter of the diagnostics laboratory transporting compartment, the higher the compression of the elastic member. Accordingly, the first elastic members 14, 14a, 14c, 14e, 14f and 14g are under higher compression compared to the first elastic members 14b and 14d.

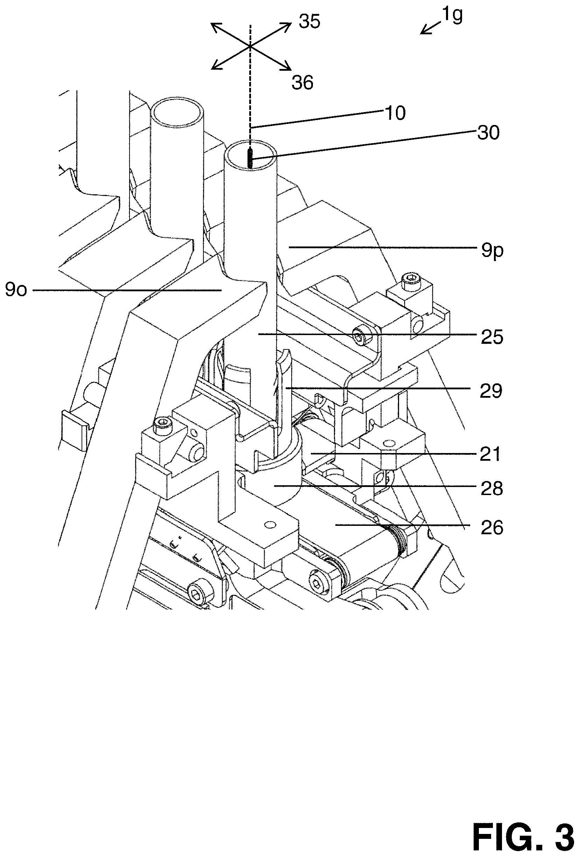

**Fig. 3** provides a perspective and enlarged view of the centering unit for diagnostics laboratory transporting compartment 1g of Fig. 2 where a diagnostics laboratory transporting compartment holder (28) with a flexible adaptor (29) is centered by the first compartment holder gripper (21) and the diagnostics laboratory transporting compartment (25) is centered by the bifurcated compartment grippers (9o, 9p). The opposite positions of the compartment grippers (9o, 9p) of the connected centering unit 1g enable the alignment of the longitudinal axis (30) of the diagnostics laboratory transporting compartment (25) and diagnostics laboratory transporting compartment holder (28) with the vertical axis of the centering position (10) along the lateral axis of the centering unit for diagnostics laboratory transporting compartment 1g (35). In the shown embodiment the compartment grippers (9o, 9p) of the centering unit are bifurcated. The bifurcated compartment grippers enable the alignment of the longitudinal axis (30) of the diagnostics laboratory transporting compartment (25) and diagnostics laboratory transporting compartment holder (28) with the vertical axis of the centering position (10) along the axis perpendicular the lateral axis of the centering unit (36). In one embodiment, the centering units for diagnostics laboratory transporting compartments are connected to a diagnostics laboratory transporting compartment conveyor (26) for moving and removing the diagnostics laboratory transporting compartments between the compartment grippers (9o, 9n).

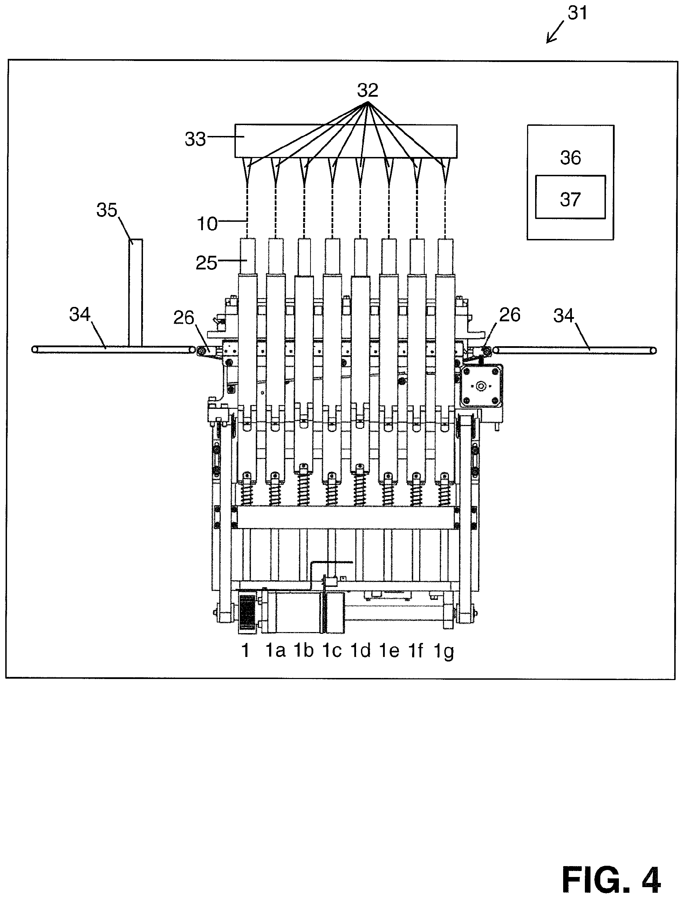

**Fig. 4** shows an embodiment of a laboratory system (31) to center eight diagnostics laboratory transporting compartment with different diameters (25) for eight aspiration/ dispensation positions (32) of a pipetting device (33) at the same time. The eight diagnostics laboratory transporting compartment with different diameters (25) are inserted in eight diagnostics laboratory transporting compartment holder with flexible adaptors (29 in Fig. 3). Each aspiration and/or dispensation position (32) is aligned with the vertical axis of the centering position (10) of the corresponding centering unit for diagnostics laboratory transporting compartment (1- 1g). For moving and removing the diagnostics laboratory transporting compartment holders between the arm pairs of the centering units for diagnostics laboratory transporting compartment (1-1g), the laboratory system comprises a diagnostics laboratory transporting compartment conveyor (26) which is operatively coupled to a laboratory conveyor system (34). When the diagnostics laboratory transporting compartment holders and corresponding diagnostics laboratory transporting compartments are located between the arm pairs, the interruption of a light beam is detected by a light barrier (27 of Fig. 1) and generates a signal which is transmitted to a control device (36). The control device (36) comprises a computing device (37) adapted to execute software which is configured to interpret the signal and to send commands to the actuator in order to move the further connector towards the pivot points and thereby moving the compartment grippers towards the vertical axis of the centering position (10). As further shown in Fig.4, in front of the connected centering units for diagnostics laboratory transporting compartment, a stopper (35) for grouping diagnostics laboratory transporting compartments to be centered which are then transported to the connected centering units for diagnostics laboratory transporting compartment.

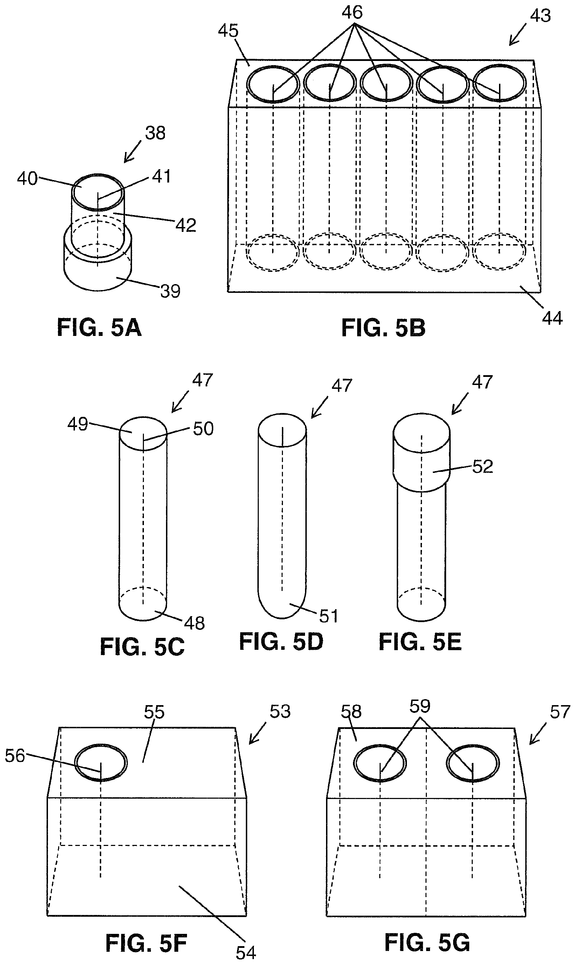

Fig. 5A-B show embodiments of diagnostics laboratory transporting compartment holders. **Fig. 5A** shows a diagnostics laboratory transporting compartment holder (38) having a cylindrical shape, a closed bottom (39), and an open top with an insertion area (40) for inserting one diagnostics laboratory transporting compartment in an upright position. The diagnostics laboratory transporting compartment holder (38) possesses a longitudinal axis (41) perpendicular to and in the midpoint of its horizontal cross section. The insertion area of the diagnostics laboratory transporting compartment holder comprises a flexible adapter (42) configured to receive diagnostics laboratory transporting compartments of different dimensions. **Fig. 5B** shows a diagnostics laboratory transporting compartment holder (43) having a cubic shape, a closed bottom (44), and a top with five insertion areas (45) for inserting multiple diagnostics laboratory transporting compartments in an upright position. The cubic diagnostics laboratory transporting compartment holder possesses (43) five longitudinal axis (46) in the midpoints of the five insertion areas and perpendicular to its horizontal cross section. Fig. 5C-G shows embodiments of diagnostics laboratory transporting compartments. **Fig. 5C** shows a diagnostics laboratory transporting compartment (47) having a cylindrical shape, a closed bottom (48), and an open top (49). The cylindrical diagnostics laboratory transporting compartment possesses a longitudinal axis (50) perpendicular to and in the midpoint of its horizontal cross section. Alternatively, the closed bottom (51) of the cylindrical diagnostics laboratory transporting compartment (47) can be rounded as shown in **Fig. 5D**. **Fig. 5E** depicts a diagnostics laboratory transporting compartment (47) equipped with a cap (52). In **Fig. 5F** a diagnostics laboratory transporting compartment having a cubic shape (53), a closed bottom (54), and a top with one pipetting opening (55) is hsown. The diagnostics laboratory transporting compartment possesses one longitudinal axis (56) which is in the midpoint of the one pipetting opening and perpendicular to its horizontal cross section. In **Fig. 5G** a cubic diagnostics laboratory transporting compartment (57) having a top with two pipetting openings (58) is shown. Accordingly, the diagnostics laboratory transporting compartment possesses two longitudinal axis (59) which are in the midpoint of the two pipetting openings and perpendicular to its horizontal cross section.

## Claims

1. Centering unit for diagnostics laboratory transporting compartment (1), comprising:
- at least one first and one second hinged arms (4a, 4b), each comprising a first end portion and a second end portion, each with a compartment gripper (9a, 9b) at the first end portion, wherein the at least one first and one second hinged arms (4a, 4b) are mounted pivotally and opposite each other on a frame (3), wherein a vertical axis of a centering position (10) is determined by a middle distance between the two opposing compartment grippers (9a, 9b),
- a first connector (11) to which each of the second end portions of the first and second hinged arms (4a, 4b) are connected pivotally, wherein the first connector is movably connected on a guiding element (13),
- a second connector (15), wherein the second connector and the first connector (11) are resiliently connected to each other with a first elastic member (14), wherein the second connector is movably connected on the guiding element (13),
- an actuator (16) for moving the second connector (15), **characterized in** at least one third rotatable arm (18) with an exposed end (20) and a first compartment holder gripper (21) at an end portion opposite to the exposed end, wherein the at least one third rotatable arm is coupled pivotally and opposite to a counterpart (22) on the frame (3) or on a further frame with a second elastic member, wherein the exposed end (20) is positioned so that a rotation of the third rotatable arm (18) and movement of the compartment holder gripper (21) away from the vertical axis of the centering position (10) is triggered by means of engagement with one of the at least one first and one second hinged arms (4a, 4b).

2. Centering unit for diagnostics laboratory transporting compartment (1) according to claim 1, wherein the compartment grippers (9a, 9b) of the at least one first and one second hinged arms (4a, 4b) and the compartment holder gripper (21) of the at least one third rotatable arm (18) are bifurcated.

3. Centering unit for diagnostics laboratory transporting compartment (1) according to claim 1 or 2, wherein the first elastic member (14) is a spring.

4. Centering unit for diagnostics laboratory transporting compartment according to any of the claims 1 to 3, wherein the second elastic member is a torsion spring.

5. Centering unit for diagnostics laboratory transporting compartment (1) according to any of the claims 1 to 4, wherein said counterpart (22) is a fourth rotatable arm (18) with an exposed end (20) and a second compartment holder gripper (21).

6. Centering unit for diagnostics laboratory transporting compartment (1) according to any of the claims 1 to 5, wherein each of the at least one first and one second hinged arms (4a, 4b) comprises a first arm member (5a, 5b) and a second arm member (6a, 6b) connected to each other pivotally with a respective j oint (7a, 7b), wherein in the middle region of the first arm member each hinged arm (4a, 4b) is connected pivotally about a pivot point (8a, 8b) on the frame (3), wherein the distance between the compartment gripper (9a, 9b) and the pivot point (8a, 8ab) of each of the at least one first and one second hinged arms (4a, 4b) and the distance between the pivot point (8a, 8b) and the respective j oint of each of the at least one first and one second hinged arms (7a, 7b) have a ratio between 1 and 0.1.

7. Centering unit for diagnostics laboratory transporting compartment (1) according to any of the claims 1 to 6, wherein said centering unit for diagnostics laboratory transporting compartment (1) is connected to at least one further centering unit for diagnostics laboratory transporting compartment (1a- 1g), wherein the second connectors (15) of each centering unit for diagnostics laboratory transporting compartment (1, 1a-1g) are connected to a common connector (23), wherein said common connector (23) is connected movably on at least two guiding elements (13), wherein said common connector is coupled to the actuator (16).

8. Laboratory system (31), comprising:
- at least one centering unit for diagnostics laboratory transporting compartment (1, 1a-1g) according to claims 1 to 7
- at least one diagnostics laboratory transporting compartment holder (28) having one or more flexible adaptors (29) configured to receive at least one diagnostics laboratory transporting compartment of different dimensions
- at least one diagnostics laboratory transporting compartment (25), wherein the at least one diagnostics laboratory transporting compartment (25) is a vessel comprising a test sample, wherein the at least one diagnostics laboratory transporting compartment is inserted in the diagnostics laboratory transporting compartment holder (28).

9. Laboratory system (31) according to claim 8, further comprising:
- a pipetting device (33) having at least one aspiration and/or dispensation position (32) or a handling device having at least one handle position, wherein the at least one aspiration and/or dispensation position (32) or the handle position is aligned with the vertical axis of the centering position (10).

10. Laboratory system (31) according to any of the claims 8 to 9, further comprising:
- a diagnostics laboratory transporting compartment conveyor (26), wherein the diagnostics laboratory transporting compartment conveyor is capable of being operatively coupled to a laboratory conveyor system (34).

11. Method for centering a diagnostics laboratory transporting compartment using a centering unit for diagnostics laboratory transporting compartment (1) according to any of the claims 1 to 7, comprising the following steps:
a) moving the second connector (15) to a first moving direction, thereby extending the at least one first and one second hinged arms (4a, 4b) and positioning the compartment grippers (9a, 9b) to a diagnostics laboratory transporting compartment receiving and releasing position;
b) moving a diagnostics laboratory transporting compartment (25) between the compartment grippers (9a, 9b);
c) moving the second connector (15) to a second moving direction, thereby flexing the at least one first and one second hinged arms and moving the grippers towards the vertical axis of the centering position, wherein the compartment grippers (9a, 9b) press from opposite sides on the diagnostics laboratory transporting compartment (25) to align a longitudinal axis of the diagnostics laboratory transporting compartment (30) with the vertical axis of the centering position (10);
d) repeating step a) to release the diagnostics laboratory transporting compartment (25);
e) removing the diagnostics laboratory transporting compartment (25) between the grippers (9a, 9b), wherein in step a) at least one of the at least one first and one second hinged arms (4b) presses on the exposed end (20) of the at least one third rotatable arm (18) resulting in a rotation of the rotatable arm (18) thereby positioning the compartment holder gripper (21) to a diagnostics laboratory transporting compartment holder receiving and releasing position and building tension on the further elastic member, and
wherein in step c) at least one of the at least one first and one second hinged arms (4b) releases the exposed end (20) of the at least one third rotatable arm (18) resulting in a tension relaxation of the second elastic member and a rotation of the at least one third rotatable arm (18) thereby moving the compartment holder gripper (21) towards the vertical axis of the centering position (10), wherein the compartment holder gripper (21) presses on the diagnostics laboratory transporting compartment holder (28) and on the counterpart (22) to align the longitudinal axis of the diagnostics laboratory transporting compartment holder (28) with the longitudinal axis of the centering position (10).

12. Method for centering a diagnostics laboratory transporting compartment according to claim 11, wherein in step c) the longitudinal axis of the diagnostics laboratory transporting compartment holder (28) is aligned with the vertical axis of the centering position (10) before the longitudinal axis (30) of the diagnostics laboratory transporting compartment (25) is aligned with the vertical axis of the centering position (10) and in step d) released after the diagnostics laboratory transporting compartment (25) is released.

13. Method for centering a diagnostics laboratory transporting compartment according to any of the claims 11 to 12, wherein the moving of the diagnostics laboratory transporting compartment (25) between the compartment grippers (9a, 9b) of the at least one first and one second hinged arms (4a, 4b) and the removing of the diagnostics laboratory transporting compartment (25) between the compartment grippers (9a, 9b) of the at least one first and one second hinged arms (4a, 4b) is mediated by a diagnostics laboratory transporting compartment conveyor (26).

## Patentansprüche

1. Zentriereinheit für ein Transportfach für Labordiagnostika (1), umfassend:
- mindestens einen ersten und einen zweiten Gelenkarm (4a, 4b), die jeweils einen ersten Endabschnitt und einen zweiten Endabschnitt umfassen, jeweils mit einem Fachgreifer (9a, 9b) am ersten Endabschnitt, wobei der mindestens eine erste und eine zweite Gelenkarm (4a, 4b) schwenkbar und einander gegenüberliegend an einem Rahmen (3) montiert sind, wobei eine vertikale Achse einer Zentrierposition (10) von einem Mittenabstand zwischen den beiden gegenüberliegenden Fachgreifern (9a, 9b) bestimmt wird,
- ein erstes Verbindungsstück (11), mit dem jeder der zweiten Endabschnitte des ersten und zweiten Gelenkarms (4a, 4b) schwenkbar verbunden ist, wobei das erste Verbindungsstück beweglich mit einem Führungselement (13) verbunden ist,
- ein zweites Verbindungsstück (15), wobei das zweite Verbindungsstück und das erste Verbindungsstück (11) mit einem ersten elastischen Bauteil (14) federnd miteinander verbunden sind, wobei das zweite Verbindungsstück beweglich mit dem Führungselement (13) verbunden ist,
- einen Aktuator (16) zum Bewegen des zweiten Verbindungsstücks (15), **gekennzeichnet durch** mindestens einen dritten drehbaren Arm (18) mit einem freiliegenden Ende (20) und einem ersten Fachhaltegreifer (21) an einem Endabschnitt gegenüber dem freiliegenden Ende, wobei der mindestens eine dritte drehbare Arm schwenkbar und gegenüber einem Gegenstück (22) an den Rahmen (3) oder an einen weiteren Rahmen mit einem zweiten elastischen Bauteil gekoppelt ist, wobei das freiliegende Ende (20) so positioniert ist, dass eine Drehung des dritten drehbaren Arms (18) und eine Bewegung des Fachhaltegreifers (21) weg von der vertikalen Achse der Zentrierposition (10) mittels Eingriff in einen von dem mindestens einen ersten und einen zweiten Gelenkarm (4a, 4b) ausgelöst wird.

2. Zentriereinheit für ein Transportfach für Labordiagnostika (1) nach Anspruch 1, wobei die Fachgreifer (9a, 9b) des mindestens einen ersten und einen zweiten Gelenkarms (4a, 4b) und der Fachhaltegreifer (21) des mindestens einen dritten drehbaren Arms (18) gegabelt sind.

3. Zentriereinheit für ein Transportfach für Labordiagnostika (1) nach Anspruch 1 oder 2, wobei das erste elastische Bauteil (14) eine Feder ist.

4. Zentriereinheit für ein Transportfach für Labordiagnostika nach einem der Ansprüche 1 bis 3, wobei das zweite elastische Bauteil eine Drehfeder ist.

5. Zentriereinheit für ein Transportfach für Labordiagnostika (1) nach einem der Ansprüche 1 bis 4, wobei das Gegenstück (22) ein vierter drehbarer Arm (18) mit einem freiliegenden Ende (20) und einem zweiten Fachhaltegreifer (21) ist.

6. Zentriereinheit für ein Transportfach für Labordiagnostika (1) nach einem der Ansprüche 1 bis 5, wobei jeder des mindestens einen ersten und einen zweiten Gelenkarms (4a, 4b) ein erstes Armbauteil (5a, 5b) und ein zweites Armbauteil (6a, 6b) umfasst, die miteinander schwenkbar mit einem jeweiligen Gelenk (7a, 7b) verbunden sind, wobei in der Mittenregion des ersten Armbauteils jeder Gelenkarm (4a, 4b) schwenkbar um einen Gelenkpunkt (8a, 8b) mit dem Rahmen (3) verbunden ist, wobei der Abstand zwischen dem Fachgreifer (9a, 9b) und dem Gelenkpunkt (8a, 8ab) von jedem von dem mindestens einen ersten und einen zweiten Gelenkarm (4a, 4b) und der Abstand zwischen dem Gelenkpunkt (8a, 8b) und dem jeweiligen Gelenk von jedem von dem mindestens einen ersten und einen zweiten Gelenkarm (7a, 7b) ein Verhältnis zwischen 1 und 0,1 haben.

7. Zentriereinheit für ein Transportfach für Labordiagnostika (1) nach einem der Ansprüche 1 bis 6, wobei die Zentriereinheit für ein Transportfach für Labordiagnostika (1) mit mindestens einer weiteren Zentriereinheit für ein Transportfach für Labordiagnostika (1a-1g) verbunden ist, wobei die zweiten Verbindungsstücke (15) jeder Zentriereinheit für ein Transportfach für Labordiagnostika (1, 1a-1g) mit einem gemeinsamen Verbindungsstück (23) verbunden sind, wobei das gemeinsame Verbindungsstück (23) beweglich mit mindestens zwei Führungselementen (13) verbunden ist, wobei das gemeinsame Verbindungsstück an den Aktuator (16) gekoppelt ist.

8. Laborsystem (31), umfassend:
- mindestens eine Zentriereinheit für ein Transportfach für Labordiagnostika (1, 1a-1g) nach den Ansprüchen 1 bis 7,
- mindestens einen Halter für das Transportfach für Labordiagnostika (28) mit einem oder mehreren flexiblen Passstück(en) (29), das/die dafür ausgebildet ist/sind, mindestens ein Transportfach für Labordiagnostika mit verschiedenen Abmessungen aufzunehmen,
- mindestens ein Transportfach für Labordiagnostika (25), wobei das mindestens eine Transportfach für Labordiagnostika (25) ein Gefäß ist, das eine Testprobe umfasst, wobei das mindestens eine Transportfach für Labordiagnostika in den Halter für das Transportfach für Labordiagnostika (28) eingeführt wird.

9. Laborsystem (31) nach Anspruch 8, ferner umfassend:
- eine Pipettiervorrichtung (33) mit mindestens einer Ansaug- und/oder Abgabeposition (32) oder eine Handhabungsvorrichtung mit mindestens einer Handhabungsposition, wobei die mindestens eine Ansaug- und/oder Abgabeposition (32) oder die Handhabungsposition nach der vertikalen Achse der Zentrierposition (10) ausgerichtet ist.

10. Laborsystem (31) nach einem der Ansprüche 8 bis 9, ferner umfassend:
- einen Förderer für das Transportfach für Labordiagnostika (26), wobei der Förderer für das Transportfach für Labordiagnostika funktionsfähig an ein Laborförderersystem (34) gekoppelt werden kann.

11. Verfahren zum Zentrieren eines Transportfaches für Labordiagnostika unter Verwendung einer Zentriereinheit für das Transportfach für Labordiagnostika (1) nach einem der Ansprüche 1 bis 7, umfassend die folgenden Schritte:
a) Bewegen des zweiten Verbindungsstückes (15) in eine erste Bewegungsrichtung, wodurch der mindestens eine erste und eine zweite Gelenkarm (4a, 4b) verlängert werden, und Positionieren der Fachgreifer (9a, 9b) in einer Aufnahme- und Freigabeposition des Transportfaches für Labordiagnostika;
b) Bewegen eines Transportfaches für Labordiagnostika (25) zwischen den Fachgreifern (9a, 9b);
c) Bewegen des zweiten Verbindungsstückes (15) in eine zweite Bewegungsrichtung, wodurch der mindestens eine erste und eine zweite Gelenkarm gebeugt werden, und Bewegen der Greifer in Richtung der vertikalen Achse der Zentrierposition, wobei die Fachgreifer (9a, 9b) von gegenüberliegenden Seiten auf das Transportfach für Labordiagnostika (25) drücken, um eine Längsachse des Transportfaches für Labordiagnostika (30) nach der vertikalen Achse der Zentrierposition (10) auszurichten;
d) Wiederholen von Schritt a), um das Transportfach für Labordiagnostika (25) freizugeben;
e) Entfernen des Transportfaches für Labordiagnostika (25) zwischen den Greifern (9a, 9b), wobei in Schritt a) mindestens einer von dem mindestens einen ersten und einen zweiten Gelenkarm (4b) auf das freiliegende Ende (20) des mindestens einen dritten drehbaren Arms (18) drückt, was zu einer Drehung des drehbaren Arms (18) führt, wodurch der Fachhaltegreifer (21) in einer Aufnahme- und Freigabeposition des Transportfaches für Labordiagnostika positioniert und Spannung an dem weiteren elastischen Bauteil aufgebaut wird, und
wobei in Schritt c) mindestens einer von dem mindestens einen ersten und einen zweiten Gelenkarm (4b) das freiliegende Ende (20) des mindestens einen dritten drehbaren Arms (18) freigibt, was zu einer Spannungsentlastung des zweiten elastischen Bauteils und einer Drehung des mindestens einen dritten drehbaren Arms (18) führt, wodurch der Fachhaltegreifer (21) in Richtung der vertikalen Achse der Zentrierposition (10) bewegt wird, wobei der Fachhaltegreifer (21) auf den Halter für das Transportfachs für Labordiagnostika (28) und auf das Gegenstück (22) drückt, um die Längsachse des Halters für das Transportfach für Labordiagnostika (28) nach der Längsachse der Zentrierposition (10) auszurichten.

12. Verfahren zum Zentrieren eines Transportfaches für Labordiagnostika nach Anspruch 11, wobei in Schritt c) die Längsachse des Halters für das Transportfaches für Labordiagnostika (28) nach der vertikalen Achse der Zentrierposition (10) ausgerichtet wird, bevor die Längsachse (30) des Transportfaches für Labordiagnostika (25) nach der vertikalen Achse der Zentrierposition (10) ausgerichtet wird, und in Schritt d) freigegeben wird, nachdem das Transportfach für Labordiagnostika (25) freigegeben wurde.

13. Verfahren zum Zentrieren eines Transportfaches für Labordiagnostika nach einem der Ansprüche 11 bis 12, wobei das Bewegen des Transportfaches für Labordiagnostika (25) zwischen den Fachgreifern (9a, 9b) des mindestens einen ersten und einen zweiten Gelenkarms (4a, 4b) und das Entfernen des Transportfaches für Labordiagnostika (25) zwischen den Fachgreifern (9a, 9b) des mindestens einen ersten und einen zweiten Gelenkarms (4a, 4b) von einem Förderer für das Transportfach für Labordiagnostika (26) vermittelt wird.

## Revendications

1. Unité de centrage pour compartiment de transport de laboratoire de diagnostics (1), comprenant :
- au moins un premier et un deuxième bras articulés (4a, 4b), chacun comprenant une première partie d'extrémité et une seconde partie d'extrémité, chacune avec un préhenseur de compartiment (9a, 9b) au niveau de la première partie d'extrémité, les au moins un premier et un deuxième bras articulés (4a, 4b) étant montés de manière pivotante et opposés l'un à l'autre sur un cadre (3), un axe vertical d'une position de centrage (10) étant déterminé par une distance médiane entre les deux préhenseurs de compartiment (9a, 9b) opposés,
- un premier connecteur (11) auquel chacune des secondes parties d'extrémité des premier et deuxième bras articulés (4a, 4b) sont connectées de manière pivotante, le premier connecteur étant connecté de manière mobile sur un élément de guidage (13),
- un second connecteur (15), le second connecteur et le premier connecteur (11) étant connectés de manière élastique l'un à l'autre avec un premier élément élastique (14), le second connecteur étant connecté de manière mobile sur l'élément de guidage (13),
- un actionneur (16) pour déplacer le second connecteur (15), **caractérisé par** au moins un troisième bras rotatif (18) avec une extrémité exposée (20) et un premier préhenseur de support de compartiment (21) au niveau d'une partie d'extrémité opposée à l'extrémité exposée, l'au moins un troisième bras rotatif étant couplé de manière pivotante et opposé à une contrepartie (22) sur le cadre (3) ou sur un cadre supplémentaire avec un second élément élastique, l'extrémité exposée (20) étant positionnée de sorte qu'une rotation du troisième bras rotatif (18) et le déplacement du préhenseur de support de compartiment (21) s'éloignant de l'axe vertical de la position de centrage (10) est déclenché au moyen d'une mise en prise avec l'un des au moins un premier et un deuxième bras articulés (4a, 4b).

2. Unité de centrage pour compartiment de transport de laboratoire de diagnostics (1) selon la revendication 1, dans laquelle les préhenseurs de compartiment (9a, 9b) des au moins un premier et un deuxième bras articulés (4a, 4b) et le préhenseur de support de compartiment (21) de l'au moins un troisième bras rotatif (18) sont bifurqués.

3. Unité de centrage pour compartiment de transport de laboratoire de diagnostics (1) selon la revendication 1 ou 2, dans laquelle le premier élément élastique (14) est un ressort.

4. Unité de centrage pour compartiment de transport de laboratoire de diagnostics selon l'une quelconque des revendications 1 à 3, dans laquelle le second élément élastique est un ressort de torsion.

5. Unité de centrage pour compartiment de transport de laboratoire de diagnostics (1) selon l'une quelconque des revendications 1 à 4, dans laquelle ladite contrepartie (22) est un quatrième bras rotatif (18) avec une extrémité exposée (20) et un second préhenseur de support de compartiment (21).

6. Unité de centrage pour compartiment de transport de laboratoire de diagnostics (1) selon l'une quelconque des revendications 1 à 5, dans laquelle chacun des au moins un premier et un deuxième bras articulés (4a, 4b) comprend un premier élément de bras (5a, 5b) et un second élément de bras (6a, 6b) connectés l'un à l'autre de manière pivotante par une articulation (7a, 7b) respective, dans laquelle dans la région médiane du premier élément de bras chaque bras articulé (4a, 4b) est connecté de manière pivotante autour d'un point de pivot (8a, 8b) sur le cadre (3), dans laquelle la distance entre le préhenseur de compartiment (9a, 9b) et le point de pivot (8a, 8ab) de chacun des au moins un premier et un deuxième bras articulés (4a, 4b) et la distance entre le point de pivot (8a, 8b) et l'articulation respective de chacun des au moins un premier et un deuxième bras articulés (7a, 7b) ont un rapport compris entre 1 et 0,1.

7. Unité de centrage pour compartiment de transport de laboratoire de diagnostics (1) selon l'une quelconque des revendications 1 à 6, dans laquelle ladite unité de centrage pour compartiment de transport de laboratoire de diagnostics (1) est connectée à au moins une unité de centrage pour compartiment de transport de laboratoire de diagnostics (1a-1g) supplémentaire, dans laquelle les seconds connecteurs (15) de chaque unité de centrage pour compartiment de transport de laboratoire de diagnostics (1, 1a-1g) sont connectés à un connecteur commun (23), dans laquelle ledit connecteur commun (23) est connecté de manière mobile sur au moins deux éléments de guidage (13), dans laquelle ledit connecteur commun est couplé à l'actionneur (16).

8. Système de laboratoire (31), comprenant :
- au moins une unité de centrage pour compartiment de transport de laboratoire de diagnostics (1, 1a-1g) selon les revendications 1 à 7
- au moins un support de compartiment de transport de laboratoire de diagnostics (28) ayant un ou plusieurs adaptateurs (29) souples conçus pour recevoir au moins un compartiment de transport de laboratoire de diagnostics de dimensions différentes
- au moins un compartiment de transport de laboratoire de diagnostics (25), l'au moins un compartiment de transport de laboratoire de diagnostics (25) étant un récipient comprenant un échantillon de test, l'au moins un compartiment de transport de laboratoire de diagnostics étant inséré dans le support de compartiment de transport de laboratoire de diagnostics (28).

9. Système de laboratoire (31) selon la revendication 8, comprenant en outre :
- un dispositif de pipetage (33) ayant au moins une position d'aspiration et/ou de distribution (32) ou un dispositif de manipulation ayant au moins une position de manipulation, l'au moins une position d'aspiration et/ou de distribution (32) ou la position de manipulation étant alignée avec l'axe vertical de la position de centrage (10).

10. Système de laboratoire (31) selon l'une quelconque des revendications 8 à 9, comprenant en outre :
- un convoyeur de compartiment de transport de laboratoire de diagnostics (26), le convoyeur de compartiment de transport de laboratoire de diagnostics étant capable d'être couplé de manière fonctionnelle à un système de convoyeur de laboratoire (34).

11. Procédé de centrage d'un compartiment de transport de laboratoire de diagnostics en utilisant une unité de centrage pour compartiment de transport de laboratoire de diagnostics (1) selon l'une quelconque des revendications 1 à 7, comprenant les étapes suivantes :
a) déplacement du second connecteur (15) dans une première direction de déplacement, étendant ainsi les au moins un premier et un deuxième bras articulés (4a, 4b) et positionnant les préhenseurs de compartiment (9a, 9b) dans une position de réception et de libération de compartiment de transport de laboratoire de diagnostics ;
b) déplacement d'un compartiment de transport de laboratoire de diagnostics (25) entre les préhenseurs de compartiment (9a, 9b) ;
c) déplacement du second connecteur (15) dans une seconde direction de déplacement, pliant ainsi les au moins un premier et un deuxième bras articulés et déplaçant les préhenseurs vers l'axe vertical de la position de centrage, les préhenseurs de compartiment (9a, 9b) appuyant depuis des côtés opposés sur le compartiment de transport de laboratoire de diagnostics (25) pour aligner un axe longitudinal du compartiment de transport de laboratoire de diagnostics (30) avec l'axe vertical de la position de centrage (10) ;
d) répétition de l'étape a) pour libérer le compartiment de transport de laboratoire de diagnostics (25) ;
e) retrait du compartiment de transport de laboratoire de diagnostics (25) entre les préhenseurs (9a, 9b), dans lequel dans l'étape a) au moins l'un des au moins un premier et un deuxième bras articulés (4b) appuie sur l'extrémité exposée (20) de l'au moins un troisième bras rotatif (18) résultant en une rotation du bras rotatif (18) positionnant ainsi le préhenseur de support de compartiment (21) dans une position de réception et de libération de support de compartiment de transport de laboratoire de diagnostics et développant une tension sur l'élément élastique supplémentaire, et
dans lequel dans l'étape c) au moins l'un des au moins un premier et un deuxième bras articulés (4b) libère l'extrémité exposée (20) de l'au moins un troisième bras rotatif (18) résultant en un relâchement de tension du second élément élastique et une rotation de l'au moins un troisième bras rotatif (18) déplaçant ainsi le préhenseur de support de compartiment (21) vers l'axe vertical de la position de centrage (10), dans lequel le préhenseur de support de compartiment (21) appuie sur le support de compartiment de transport de laboratoire de diagnostics (28) et sur la contrepartie (22) pour aligner l'axe longitudinal du support de compartiment de transport de laboratoire de diagnostics (28) avec l'axe longitudinal de la position de centrage (10).

12. Procédé de centrage d'un compartiment de transport de laboratoire de diagnostics selon la revendication 11, dans lequel dans l'étape c) l'axe longitudinal du support de compartiment de transport de laboratoire de diagnostics (28) est aligné avec l'axe vertical de la position de centrage (10) avant que l'axe longitudinal (30) du compartiment de transport de laboratoire de diagnostics (25) soit aligné avec l'axe vertical de la position de centrage (10) et dans l'étape d) libéré après que le compartiment de transport de laboratoire de diagnostics (25) est libéré.

13. Procédé de centrage d'un compartiment de transport de laboratoire de diagnostics selon l'une quelconque des revendications 11 à 12, dans lequel le déplacement du compartiment de transport de laboratoire de diagnostics (25) entre les préhenseurs de compartiment (9a, 9b) des au moins un premier et un deuxième bras articulés (4a, 4b) et le retrait du compartiment de transport de laboratoire de diagnostics (25) entre les préhenseurs de compartiment (9a, 9b) des au moins un premier et un deuxième bras articulés (4a, 4b) est induit par un convoyeur de compartiment de transport de laboratoire de diagnostics (26).
